# EUROPÄISCHE PATENTSCHRIFT

(11) **EP 1 929 083 B1**
(45) Veröffentlichungstag und Bekanntmachung des Hinweises auf die Patenterteilung: **21.05.2014**
(21) Anmeldenummer: 06820833.9
(22) Anmeldetag: 17.08.2006
(51) Int. Cl.: D06M 11/83, D06M 11/09, D06M 11/55, D06M 11/64, D01F 11/00, D01F 11/12, D01F 11/14

(54) **Mehrschichtmaterial**
Multilayer material
Matériau multicouche

(30) Priorität: 27.09.2005 DE 102005046262; 23.12.2005 DE 102005062182; 13.07.2006 DE 102006032688; 09.08.2006 DE 102006037185
(43) Veröffentlichungstag der Anmeldung: 11.06.2008
(73) Patentinhaber: Curamik Electronics GmbH, 92676 Eschenbach (DE)
(72) Erfinder: TSE, Ka Chun, Hong Kong (CN); TANG, Ben, Zhong, Hong Kong (CN)
(74) Vertreter: Graf Glück Kritzenberger
(86) Internationale Anmeldenummer: PCT/IB2006/003056
(87) Internationale Veröffentlichungsnummer: WO 2007/036805

(56) Entgegenhaltungen:
- WO-A-02/075018
- WO-A-2004/114404
- WO-A-2005/040265
- WO-A2-2004/102659
- WO-A2-2005/028174
- JP-A- 2005 200 732
- DATABASE WPI Week 200451 Derwent Publications Ltd., London, GB; AN 2004-528117 XP002421409 & JP 2004 183127 A (ACHILLES CORP KK) 2. Juli 2004 (2004-07-02)

## Beschreibung

Die Erfindung bezieht sich auf ein Mehrschichtmaterial gemäß Oberbegriff Patentanspruch 1.

Ein derartiges Mehrschichtmaterial in Form einer Vorrichtung, die aus einer beispielsweise von einem elektirschen oder elektronischen Bauteil gebildeten Wärmequelle, aus einer Wärmesenke sowie aus einer Zwischenschicht aus einer thermisch leitenden Masse besteht, ist bekannt (WO 2004/114404 A1). Die in ihrer Funktion einer Wärmeleitpaste entsprechende und zumindest bei der Betriebstemperatur der Wärmequelle pastöse oder flüssige Zwischenschicht enthält Nanofasern eingelagert in einer organischen Matrix. Um den Wärmeübergang zwischen der Wärmequelle und der Wärmesenke zu erreichen, liegen diese Elemente durch äußere Krafteinwirkung angepresst gegen die Zwischenschicht an. Bekannt ist hierbei auch, die in der organischen Matrix enthaltenen Nanofasern zumindest teilweise mit einem Metall oder einer Metalllegierung zu beschichten, und zwar elektrisch bzw. elektrolytisch und/oder chemisch. Weiterhin ist bekannt, die Nanofasern vor dem Einbringen in die organische Matrix zu behandeln.

Bekannt sind weiterhin Verfahren zum Herstellen von Nanofasern, insbesondere auch röhrchenförmigen Nanofasern (WO02/075018 A1) sowie unterschiedliche Zusammensetzungen, auch aushärtbare Zusammensetzungen, die in einer polymeren Matrix Nanofasern enthalten, insbesondere auch solche, die chemisch und/oder physikalisch vorbehandelt wurden, sowie auch Verfahren zum Herstellen dieser Zusammensetzungen, (WO2005/028174 A2).

Bekannt ist ferner (WO 2005/028174 A2) die Herstellung von Zusammensetzungen bestehend aus Nanofasermaterial und Epoxy-Polymeren. Das Nanofasermaterial wird dabei funktionalisiert, und zwar durch Bildung von Carboxyl- und/oder Halogenwasser-Gruppen. Bekannt ist schließlich auch die Vorbehandlung von Nanofasermaterial mit Polyanilin (WO 2005/040265 A), welches in einer organischen Polymermatrix vermischt wird.

Unter "Nanofasermaterial" werden im Sinne der Erfindung Nanotubes und insbesondere auch Nanofasern sowie Mischungen aus Nanotubes und Nanofasern verstanden.

Aufgabe der Erfindung ist es ein Mehrschichtmaterial aufzuzeigen, welches bei vereinfachter Herstellung verbesserte physikalische Eigenschaften aufweist. Zur Lösung dieser Aufgabe ist ein Mehrschichtmaterial entsprechend dem Patentanspruch 1 ausgebildet.

In Weiterbildung der Erfindung ist das Mehrschichtmaterial bestehend aus wenigstens zwei Komponenten, die an einander benachbarten und für eine Wärmeübertragung vorgesehenen Flächen durch eine Klebeverbindung miteinander verbunden sind, beispielsweise so ausgebildet,
dass das Nanofasermaterial bzw. die dieses Material bildenden Nanofasern oder Nanotubes zumindest zum Großteil in einer Achsrichtung senkrecht zu den einander benachbarten Flächen orientiert sind,
und/oder
dass das Nanofasermaterial bzw. die dieses Material bildenden Nanofasern oder Nanotubes für das Ausrichten bzw. Orientieren durch ein äußeres Magnetfeld ferromagnetisch ausgebildet sind,
und/oder
dass das Nanofasermaterial bzw. die dieses Material bildenden Nanofasern und/oder Nanotubes mit Nanopartikeln ferromagnetisch sind, beispielsweise mit einem ferromagnetischen Material, z.B. mit Fe₂O₃ versehen bzw. beschichtet sind.
und/oder
dass auf das plattenförmiger Träger- oder Keramiksubstrat beidseitig jeweils über eine Bondschicht eine Metallschicht aufgebracht ist,
und/oder
dass das Keramik-Substrat, beispielsweise ein Substrat aus einer Aluminiumoxid, Aluminiumnitrid und/oder Siliziumnitrid-Keramik ist,
und/oder
dass die wenigstens eine Klebeschicht nach dem Aushärten durch Kompression, beispielsweise durch Hippen oder durch Behandlung im Vakuum
verdichtet ist,
wobei die vorgenannten Merkmale des Mehrschichtmaterials jeweils einzeln oder in beliebiger Kombination vorgesehen sein können.

Bei der Erfindung wird das Nanofasermaterial einer Vorbehandlung unterzogen. Diese Vorbehandlung schließt beispielsweise eine thermische Vorbehandlung ein, auf die dann z.B. eine weitere Behandlung folgt. Während dieser Vorbehandlung erfolgt z.B. in wenigstens einem Verfahrensschritt eine Oberflächenbehandlung des Nanofasermaterials, und zwar in der Weise, dass sich durch diese Oberflächenbehandlung eine verbesserte, insbesondere auch verbesserte thermische Anbindung des Nanofasermaterials an die die organische Matrix bildende wenigstens eine Matrixkomponente ergibt und hierdurch die Zusammensetzung insbesondere auch in einer Achsrichtung quer zur Längserstreckung der Nanofasern oder Nanotubes eine erhöhte thermische Leitfähigkeit bzw. einen reduzierten thermischen Widerstand aufweist. Die Oberflächenbehandlung kann auch mehrere Schritte aufweisen.

Die Vorbehandlung umfasst zusätzlich zu oder aber anstelle von dieser Oberflächenbehandlung auch ein Umschließen oder Einhüllen eines Nanofasermaterials in einem Polymer oder Copolymer, und zwar zur Erzielung spezieller Eigenschaften der Zusammensetzung bzw. zur Änderung der chemischen und/oder physikalische Eigenschaften des Nanofasermaterial, beispielsweise zur Verbesserung der Löslichkeit oder Dispergierbarkeit des Nanofasermaterials in der organischen Matrix und damit zur Verbesserung der Stabilität der Zusammensetzung. Durch die Verbesserung der Dispergierbarkeit lässt sich u.a. verhindern, dass sich das Nanofasermaterial in einem die Zusammensetzung bzw. das betreffende Produkt (z.B. Wärmeleitpaste) aufnehmenden Behälter am Behälterboden absetzt, so dass die dem Behälter entnommene Produktmenge jeweils den selben Anteil an Nanofasermaterial enthält.

Das für die Umhüllung verwendete Polymer oder Copolymer ist so ausgewählt, dass mit ihm die angestrebte Löslichkeit bzw. Dispergierbarkeit erreicht ist. Für die Umhüllung eignen sich insbesondere auch solche auf Polyanilin-Basis

Als Matrixkomponente für die organische Matrix eignet sich beispielsweise Polyethylenglykol. Auch andere Verbindungen sind als Matrixkomponente geeignet. Insbesondere dann, wenn die Zusammensetzung als Wärmeleitpaste verwendet werden, besitzt diese Zusammensetzung eine pastöse oder zähflüssige Konsistenz.

Als Nanofasern eignen sich beispielsweise solche Fasern, die unter der Bezeichnung ENF-100-HT, HTP-150F-LHT, HTP- 110FF-LHT und HTP-110F-HHT von der Electrovac GmbH, A-3400 Klosterneuburg, Österreich angeboten werden.

Weitere, bei der Erfindung verwendbare Nanofasern, die ebenfalls von der Electrovac GmbH, A-3400 Klosterneuburg, Österreich angeboten werden, sind in der nachstehenden Tabelle 1 angegeben.

**Tabelle 1**

| *Nanofaser* | *Nano-fasertyp* | *N2 Spezifische Ober-fläche [m2*/*g]* | *Durchmesser [nm]* | *Länge [µm]* | *Wärmelei t-fähigkeit [W*/*mK]* | *Elektrischer Wider-stand [Ohm*/*cm]* | *Metallgehalt [wt. %]* | *Dichte [g*/*cm3]* |
|---|---|---|---|---|---|---|---|---|
| | | | | | | | | |
| HTF150F F | AGF | 10-20 | 100-200 | >10 | >600 | <10⁻³ | <0,5 | 1,95 |
| HTF150F F | PSF | 20-30 | 100-200 | >10 | >600 | <10⁻³ | <0,5 | 1,95 |
| HTF150F F | LHT | 15-20 | 100-200 | >10 | >600 | <10⁻³ | <0,5 | >1,95 |
| HTF150F F | HHT | 15-25 | 100-200 | >10 | >600 | <10⁻³ | <0,01 | >1,95 |
| HTF110F F | AGF | 53 | 70-150 | >10 | >600 | <10⁻³ | <0,5 | 1,95 |
| HTF110F F | PSF | 50-60 | 70-150 | >10 | >600 | <10⁻³ | <0,5 | 1,95 |
| HTF110F F | LHT | 43 | 70-150 | >10 | >600 | <10⁻³ | <0,5 | >1,95 |
| HTF110F F | HHT | 41 | 70-150 | >10 | >600 | <10⁻³ | <0,01 | >1,95 |
| ENF100A A | HTE | 80-100 | 80-150 | >10 | >600 | <10⁻³ | <0,5 | 1,98 |
| ENF100A A | GFE | >50 | 80-150 | >10 | >600 | <10⁻³ | <0,01 | 2,17 |

### Nanofasertyp:

- AGF: wie gewachsen
- PSF: pyrolytische stripped Carbon Nanofaser
- LHT: ausgeheizt bei ~1000°C
- HHT: ausgeheizt bei ∼ 3000°C
- HTE: ausgeheizt bei ∼ 1000°C bei EVAC
- GFE: ausgeheizt bzw. graphitisiert bei ∼ 3000°C bei EVAC

### Demnach bedeuten:

| Nanofaser Typ | ausgeheizt bei |
|---|---|
| | |
| HTF 150 FF - LHT | etwa 1000°C |
| HTF 150 FF - HHT | etwa 3000°C |
| HTF 110 FF - LHT | etwa 1000°C |
| HTF 110 FF - HHT | etwa 3000°C |
| ENF 100 AA - HTE | etwa 1000°C |
| ENF 100 AA - GFE | etwa 3000°C - graphitisiert |
| ENF 100 HT | etwa 1000°C |

Als organische Matrixkomponente kann auch ein vernetzter oder ausgehärteter Kunststoff verwendet werden, und zwar in der Weise, dass die Zusammensetzung eine feste Konsistenz oder elastische Eigenschaften aufweist.

Die Erfindung bezieht auf ein Verbundmaterial bestehend aus einer Keramikschicht und aus wenigstens einer auf dieser Keramikschicht vorgesehenen Metallisierung oder Metallschicht. Das Verbundmaterial ist unter Verwendung der als Kleber oder Bondmaterial ausgebildeten Zusammensetzung hergestellt.

Bekannt ist die Herstellung von Verbundmaterialien auch als Leiterplatten in Form von Metall-Keramik-Substraten nach dem sogenannten DCB-Prozess. Hierbei wird die für die Erzeugung von Leiterbahnen, Anschlüssen usw. benötigte Metallisierung auf einer Keramik, z.B. auf einer Aluminium-Oxid-Keramik mit Hilfe des sogenannten "DCB-Verfahrens" (Direct-Copper-Bond-Technology) aufgebracht, und zwar unter Verwendung von die Metallisierung bildenden Metall- bzw. Kupferfolien oder Metall- bzw. Kupferblechen, die an ihren Oberflächenseiten eine Schicht oder einen Überzug (Aufschmelzschicht) aus einer chemischen Verbindung aus dem Metall und einem reaktiven Gas , bevorzugt Sauerstoff aufweisen.

Bei diesem beispielsweise in der US-PS 37 44 120 oder in der DE-PS 23 19 854 beschriebenen Verfahren bildet diese Schicht oder dieser Überzug (Aufschmelzschicht) ein Eutektikum mit einer Schmelztemperatur unter der Schmelztemperatur des Metalls (z.B. Kupfers), so dass durch Auflegen der Folie auf die Keramik und durch Erhitzen sämtlicher Schichten diese miteinander verbunden werden können, und zwar durch Aufschmelzen des Metalls bzw. Kupfers im wesentlichen nur im Bereich der Aufschmelzschicht bzw. Oxidschicht.

Dieses DCB-Verfahren weist dann z.B. folgende Verfahrensschritte auf:
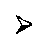 Oxidieren einer Kupferfolie derart, dass sich eine gleichmäßige Kupferoxidschicht ergibt;
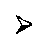 Auflegen des Kupferfolie auf die Keramikschicht;
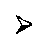 Erhitzen des Verbundes auf eine Prozesstemperatur zwischen etwa 1025 bis 1083°C, z.B. auf ca. 1071°C;
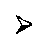 Abkühlen auf Raumtemperatur.

Bekannt ist auch das sogenannte Aktivlot-Verfahren (DE 22 13 115; EP-A-153 618) zum Verbinden von Metallisierungen bildenden Metallschichten oder Metallfolien, insbesondere auch von Kupferschichten oder Kupferfolien mit dem jeweiligen Keramikmaterial. Bei diesem Verfahren, welches speziell zum Herstellen von Metall-Keramik-Substraten verwendet wird, wird bei einer Temperatur zwischen ca. 800 - 1000°C eine Verbindung zwischen einer Metallfolie, beispielsweise Kupferfolie, und einem Keramiksubstrat, beispielsweise Aluminiumnitrid-Keramik, unter Verwendung eines Hartlots hergestellt, welches zusätzlich zu einer Hauptkomponente, wie Kupfer, Silber und/oder Gold auch ein Aktivmetall enthält. Dieses Aktivmetall, welches beispielsweise wenigstens ein Element der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist.

Das erfindungsgemäße Mehrschichtmaterial eine Leiterplatte für elektrische Schaltkreise, Module bestehend aus einem plattenförmigen zumindest an einer Oberflächenseite aus einem elektrisch isolierenden Werkstoff bestehenden Träger oder Substrat sowie aus wenigstens einer von einer Metall- oder Kupferplatte bzw. Metall- oder Kupferfolie gebildeten Metallisierung, die über das eine Kleberschicht bildende Verbundmaterial mit dem Substrat verbunden ist.

Das erfindungsgemäße Verbundmaterial weist den Vorteil einer einfachen und preiswerten Fertigung auf. Weiterhin wird über die von dem Kleber oder Bondmittel gebildete Schicht auch ein Ausgleich unterschiedlicher Temperaturausdehnungskoeffizienten der Materialien der Metallisierung und des Substrates erreicht. Insbesondere bei entsprechender Orientierung zumindest eines Teils des Nanofasermaterials in der Bond-Schicht parallel oder annähernd parallel zu den verbundenen Flächen lässt sich ein die thermische Ausdehnung der Metallisierung kompensierender Effekt erreichen.

Die Erfindung wird nachstehend auch unter Bezugnahme auf die Figuren an Ausführungsbeispielen und an Versuchsergebnissen näher erläutert. Es zeigen:
- Fig. 1: in schematischer Darstellung den Aufbau einer Messanordnung zur Messung des thermischen Widerstandes Rₜₕ von Nanofasermaterial, d.h. von Nanofasern und/oder Nanotubes enthaltenden Zusammensetzungen, auch in Form von Wärmeleitpasten;
- Fig. 2: die Darstellung eines Verfahrens für eine Oberflächenbehandlung von Nanofasern vor dem Vermischen mit einer organischen Matrixkomponente, nämlich Polyethylenglykol (PEG);
- Fig. 3: die Infrarot- bzw. Wärmetransmission in Abhängigkeit von der Wellenlänge bei Verwendung von oberflächenbehandeltem Nanofasermaterial in Form von Nanofasern im Vergleich zur Verwendung von nicht behandeltem Nanofasermaterial in der Zusammensetzung, und zwar am Beispiel der Nanofaser ENF-100HT;
- Fig. 4-6: Darstellungen wie Figur 3, jedoch bei Verwendung von Nanofasern HTP-110FF-HHT, HTP-110FF-LHT bzw. HTP-150FF-LT;
- Fig. 7: ein Verfahren beim Aufbringen einer Umhüllung auf Polyanilin-Basis auf das Nanofasermaterial;
- Fig. 8: eine Darstellung wie Figur 7 bei einer weiteren möglichen Ausführungsform der Erfindung;
- Fig. 9: in vereinfachter Darstellung eine Teillänge einer unter der Bezeichnung ENF100 erhältlichen und unter Verwendung von Nickel als Kanalisator hergestellten Nanofaser;
- Fig. 10: in einer Darstellung wie Figur 9 eine unter der Bezeichnung HTF110 erhältliche und unter Verwendung von Eisen als Katalysator hergestellten Karbon-Nanofaser;
- Fig. 11: in einer Darstellung wie Figur 2 die Verfahrensschritte eines gegenüber der Figur 2 modifizierten Verfahrens unter Verwendung der Karbon-Nanofaser der Figur 9;
- Fig. 12: ein Thermogramm (Massendekomposition in Abhängigkeit von der Temperatur - nachstehend TGA-Diagramm) für die Carbon-Nanofaser ENF100 - HT im unbehandelten Zustand sowie im behandelten Zustand, und zwar jeweils gemessen in sauerstofffreier Stickstoffatmosphäre;
- Fig. 13: ein TGA-Diagramm von verschiedenen Proben auf Basis der Nanofaser Pristine HTP-110 FF-LT;
- Fig. 14: das Infrarotspektrum der Nanofaser ENF-100 HT im unbehandelten Zustand sowie im behandelten Zustand;
- Fig. 15: das Infrarotspektrum der Nanofaser HTP-110 FF - LT bei unterschiedlichen Behandlungen;
- Fig. 16: in einem Diagramm die zeitliche Änderung des thermischen Widerstandes;
- Fig. 17: die Schema-Darstellung eines für das Einfärben der erfindungsgemäßen Zusammensetzung geeigneten Polymers (Perylene);
- Fig. 18: in schematischer Darstellung eine Teillänge einer Karbon-Nanofaser beim Beschichten dieser Faser mit ferromagnetischen Partikeln (z.B. Fe₂O₃) sowie das Ausrichten der beschichteten Nanofaser in einem äußeren Magnetfeld H;
- Fig. 19: die Darstellung eines Verfahrens zum Beschichten der Karbon-Nanofasern mit ferromagnetischen Partikeln in Form von g- Fe₂O₃;
- Fig. 20: die an verschiedenen Proben des mit g-Fe₂O₃ beschichteten Nanofasermaterials gemessenen Magnetisierungskurven;
- Fig. 21: die an verschiedenen Proben des mit Kobalt beschichteten Nanofasermaterials gemessene Magnetisierungskurven;
- Fig. 22 u. 23: in vereinfachter Darstellung jeweils einen Schnitt durch ein Verbundmaterial gemäß der Erfindung;
- Fig. 24: in schematischer Darstellung eine Messanordnung zur Bestimmung des thermischen Verhaltens einer als Kleber ausgebildeten Zusammensetzung bzw. eines Wärmeleitklebers gemäß der Erfindung;
- Fig. 25: schematisch eine Anordnung zur Vorbereitung unterschiedlicher Proben;
- Fig. 26: den Wärmewiderstand, gemessen an verschiedenen Proben;
- Fig. 27: einen Vergleich des mit der Vorrichtung der Figur 24 gemessenen thermischen Widerstandes bei verschiedenen Materialverbindungen bzw. Mehrschichtmaterialien.;
- Fig. 28: die Darstellung eines Verfahrens zur Weiterbehandlung der carboxylierten Nanofasern unter Verwendung von Tetrahydrofuran (FHF) und Triethylamin (TEA);
- Fig. 29: die Darstellung eines Verfahrens zur chemischen Beschichtung des Nanofasermaterials mit Silber bzw. mit Silberpartikeln;
- Fig. 30: die Darstellung des Verfahren der Figur 29 bei vorbehandeltem Nanofasermaterial;
- Fig. 31 ,: das Infrarotspektrum des nach dem Verfahrens der Figur 30 vorbehandelten Nanofasermaterials Pristine HTP-150FF-LHT im Vergleich zum Infrarotspektrum des unbehandelten Nanofasermaterials Pristine HTP-150FF-LHT.

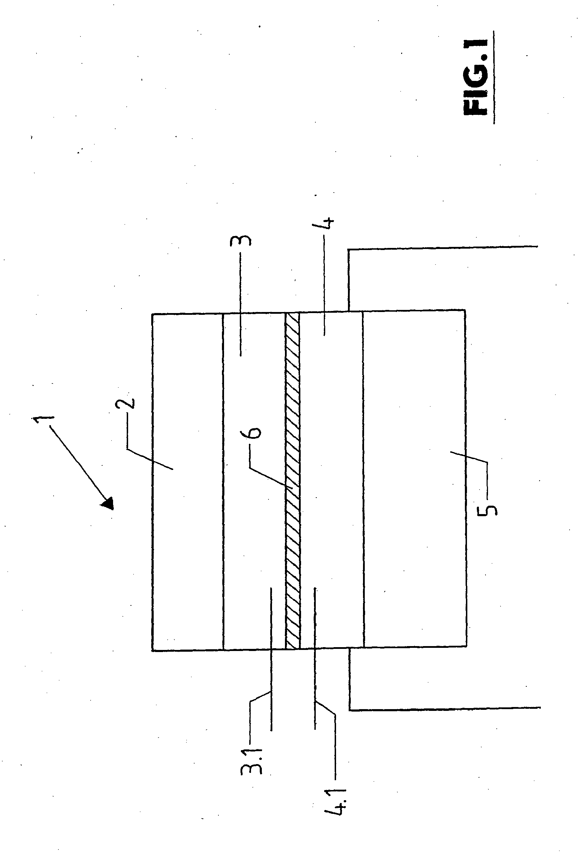

Die in der Figur 1 allgemein mit 1 bezeichnete Messanordnung zur Bestimmung des thermischen Widerstandes Rₜₕ einer Zusammensetzung, z.B. Dispersion, die eine Nanofasermaterial enthält und insbesondere für die Verwendung als Wärmeleitpaste geeignet ist, umfasst im Wesentlichen einen elektrischen Heizer 2 an einer Oberflächenseite einer ersten aus Kupfer bestehenden Platte 3, eine zweite aus Kupfer bestehende Platte 4, die auch als ein von einem Kühlmedium, nämlich von Wasser durchströmter Kühler ausgebildet ist, sowie eine Spannvorrichtung 5, mit der die Platte 4 gegen die Platte 3 verspannbar ist. In den Platten 3 und 4 sind Temperaturfühler 3.1 bzw. 4.1 vorgesehen, und zwar zur Messung der Temperatur T1 der Platte 3 bzw. der Temperatur T2 der Platte 4. Zwischen den beiden Platten 3 und 4 ist die zu messende Zusammensetzung bzw. Dispersion als Schicht 6 eingebracht.

Der thermische Widerstand Rₜₕ ist dabei, wie folgt, definiert:
Rₜₕ (°K/W) = (T1 - T2) / Leistung des Heizers in W. Die thermische Leitfähigkeit ist dann 1/Rth.

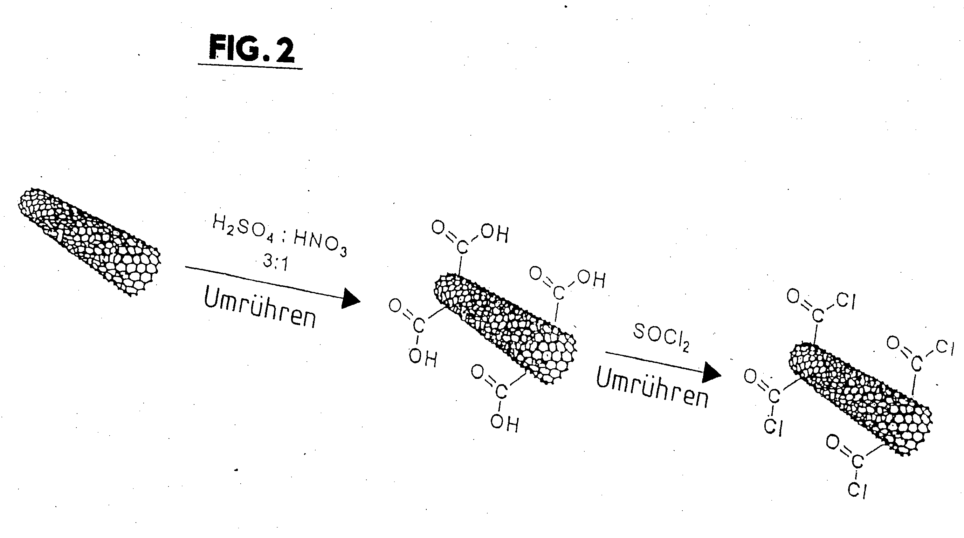

Bei einer Ausführung erfolgt die Vorbehandlung der Nanofasern auf Carbon-Basis entsprechend der Figur 2 in zwei Schritten. In einem ersten Schritt werden die Nanofasern unter ständigem Umrühren in einer Mischung behandelt, die eine anorganische Säure, beispielsweise Schwefelsäure (H₂SO₄) und Salzsäure (HNO₃) in einem Verhältnis 3:1 enthält, und zwar zur Bildung von Carboxyl-Gruppen an der Oberfläche der Nanofaser. In einem zweiten Schritt erfolgt eine weitere Behandlung in Thionyl Chlorid (Schwefligsäurechlorid), wodurch in den Carboxyl-Gruppen an der Oberfläche der Nanofaser die Hydroxyl-Gruppen (OH-Gruppen) jeweils durch ein Chloratom ersetzt werden. Diese Vorbehandlung wird nachstehend auch als TC-Vorbehandlung bezeichnet. Diese Vorbehandlung erfolgt unter ständigem Rühren. Die Gesamtbehandlungsdauer dieser Vorbehandlung beträgt beispielsweise 1,5 Stunden. Die Behandlungsdauer bezieht sich dabei auf die Gesamtdauer der beiden Verfahrensschritte.

Die so vorbehandelten oder oberflächenmodifizierten Nanofasern werden dann mit der die organische Matrix bildenden Komponente vermischt, und zwar z.B. bei einer Temperatur über Zimmertemperatur, beispielsweise bei einer Temperatur von etwa 40°C und unter Ultraschall. Als Matrixkomponente eignet sich beispielsweise Polyethylenglykol. Auch andere Materialien sind verwendbar, wie z. B. Ethylenglykol, NMP, THF oder DMF.

Durch die Vorbehandlung lässt sich eine wesentliche Reduzierung des thermischen Widerstandes Rₜₕ erreichen, wie auch die nachfolgend wiedergegebenen Messergebnisse belegen:
Bei einer Messung wurden unter jeweils denselben Bedingungen mit der Messanordnung der Fig. 1 verschiedene Proben untersucht, die Nanofasern in einer PEG-Matrix bzw. -Dispersion enthielten. Als Nanofasern wurden zunächst solche des Typs ENF-100-HT verwendet. Im Detail wurden bei den Messungen verschiedene Proben mit nicht vorbehandelten Nanofasern und mit Nanofasern, die in der vorbeschriebenen Weise (TC-Vorbehandlung) vorbehandelt wurden, hinsichtlich des thermischen Widerstandes Rₜₕ, ihres Infrarot-Transmission und Produkt-Stabilität untersucht.

Bei allen nachstehend wiedergegebenen Messungen wurde der Heizer 2 mit einer Spannung von 60V und einem Strom von 2,7A betrieben. Der durch die Spanneinrichtung 5 erzeugte Anpressdruck betrug 3bar.

Die Probe 1 enthielt nicht vorbehandelte Nanofasern und die Proben 2 - 5 Nanofasern, die in der vorstehenden Weise vorbehandelt wurden. Der Anteil an Nanofasern in der Proben 1 - 3 betrug 5Gewichts% und in den Proben 4 und 5 10Gewichts% und zwar jeweils bezogen auf die Gesamtmasse. Das Herstellen der Proben 1 - 5 erfolgte jeweils in einem Ultraschall-Bad mit einer Behandlungsdauer von 30 Min. und bei einer Temperatur von 40°C.

**Tabelle 2**

| Probe | thermischer Widerstand Rₜₕ(°K/W) | Verbesserung in % |
|---|---|---|
| | | |
| Probe 1 | 0,027 | |
| Probe 2 | 0,0207 | 29,85 |
| Probe 3 | 0,0186 | 45 |
| Probe 4 | 0,015 | 78,77 |
| Probe 5 | 0,0176 | 52,63 |

Mit jeder Probe bzw. Zusammensetzung wurden mehrere Messungen durchgeführt. Die in der vorstehenden Tabelle 2 angegebenen Werte für den thermischen Widerstand Rₜₕ sind die bei diesen Messungen ermittelten Mittelwerte.

Die vorstehende Tabelle 2 zeigt, dass durch die TC-Vorbehandlung der Nanofasern gegenüber einer Zusammensetzung, die diese Fasern ohne die TC-Vorbehandlung enthält, eine wesentliche Reduzierung des thermischen Widerstandes Rₜₕ und damit eine wesentliche Verbesserung der Eigenschaften (Wärmeleitfähigkeit 1/Rth) einer von dieser Zusammensetzung gebildeten Wärmeleitpaste erreicht werden.

Die Reduzierung des thermischen Widerstandes Rth bzw. die Erhöhung der thermischen Leitfähigkeit 1/Rth sind nach einer der Erfindung zugrunde liegenden Erkenntnis darauf zurückzuführen, dass sich durch die TC-Vorbehandlung bzw. durch die hierbei an der Oberfläche der Nanofasern gebildeten Carboxyl-Gruppen oder COCI-Gruppen eine verbesserte Einbindung der Nanofasern in die Matrix bzw. eine verbesserte Dispersion mit der PEG-Matrix ergeben, die Carboxyl-Gruppen oder COCI-Gruppen also Anbindungs- oder Koppelstrukturen bilden, die diese verbesserte Einbindung bzw. verbesserte Dispersion bewirken. Hierdurch wird u.a. der Wärmetransport über die Nanofasern auch quer zu deren Längserstreckung verbessert, was speziell bei Wärmeleitpasten, die in der Regel als dünne Schichten aufgebracht werden, von großer Bedeutung ist, da in solchen Schichten die Nanofasern mit ihrer Längserstreckung bevorzugt in eine Achsrichtung quer zu derjenigen Achsrichtung orientiert sind, in der die Wärmeübertragung erfolgt.

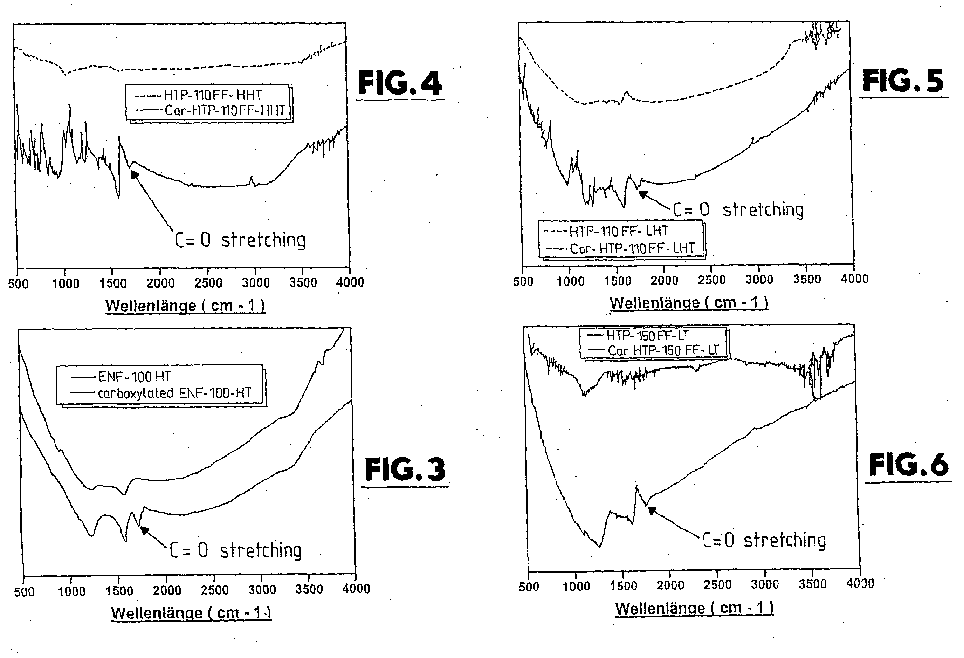

Die Figur 3 zeigt die Infrarot-Transmissionswiderstand von Proben, die Nanofasern des Typs ENF-100HT in der PEG-Matrix mit einem Anteil von 5Gewichts% enthielten, wiederum bezogen auf das Gesamtgewicht der Probe. Die Kurve A zeigt dabei den Verlauf bei nicht oberflächen- oder vorbehandelten Nanofasern und die Kurve B den Veralauf bei einer Zusammensetzung mit Nanofasern, die der vorbeschriebenen TC-Vorbehandlung unterzogen wurden. Der Verlauf der beiden Kurven A und B bestätigt ebenfalls, dass durch die Vorbehandlung u.a. eine Einstellung des thermischen Verhaltens der Zusammensetzung, insbesondere eine erhebliche Reduzierung des thermischen Widerstandes Rₜₕ erreichbar ist.

Vorstehend wurde davon ausgegangen, dass die verwendeten Nanofasern solche sind, die unter der Bezeichnung ENF-100-HT erhältlich sind. Wie die graphischen Darstellungen der Figuren 4-6 zeigen, ergibt sich auch bei anderen Nanofasern durch die TC-Vorbehandlung eine deutliche Reduzierung des Infrarot-Transmissions-Widerstandes bzw. eine deutliche Erhöhung der Infrarot-Transmission und damit eine deutliche Reduzierung des thermischen Widerstandes Rₜₕ, und zwar im Vergleich zur Verwendung von nichtbehandelten Nanofasern.

Vor der vorbeschriebenen Oberflächenbehandlung bzw. -modifikation wurden die Nanofasern bzw. das Nanofasermaterial einer Hitzebehandlung bei wenigstens 2000°C unterzogen, vorzugsweise bei einer Temperatur über 2000°C, um u.a. den bei der Herstellung des Nanofasermaterials verwendeten Katalysator zu entfernen bzw. zu verdampfen sowie die Graphit-Fasern auszurichten. Erst hierdurch wird die vorbeschriebene Oberflächenbehandlung bzw. -modifikation, d.h. insbesondere die Carboxylierung bzw. Bildung der Carboxyl-Gruppen möglich. Weiterhin kann durch die Hitzebehandlung die Graphitisierung verbessert werden.

Die Figuren 4-6 zeigen mit der Kurve A wiederum den Verlauf des Infrarot-Transmissions-Widerstandes in Abhängigkeit von der Wellenlänge bei nicht vorbehandelten Nanofasern und mit der Kurve B den Verlauf bei vorbehandelten Nanofasern und zwar für Nanofasern des Typs HTP-150FF-LHT (Figur 4), HTP-110FF-LHT (Figur 5) und HTP-110FHH (Figur 6), wobei die unterschiedlichen Nanofasern unterschiedliche Zeiten für die Vorbehandlung erfordern:

**Tabelle 3**

| Nanofaser | | ENF-100HT | HTP-150FF-LHT | HTP-110FF-LHT | HTP-110F-HHT |
|---|---|---|---|---|---|
| Behandlungsdauer in Std. | | 1,5 | 18 | 11 | 11 |

In der nachstehenden Tabelle 4 sind nochmals für die verschiedenen Nanofasern die thermischen Widerstände verschiedener Proben, die jeweils in einer PEG-Matrix im selben Anteil an Nanofasern in nicht vorbehandelter bzw. in vorbehandelter Form enthalten, zusammengefasst:

**Tabelle 4**

| Nanofasermaterial bzw. Nanofasern | thermischer Widerstand Rₜₕ (°K/W) Nanofasern ohne TC-Vorbehandlung | Rth (°K/W) Nanofasern mit TC-Vorbehandlung | Verbesserung in % bezogen auf nicht vorbehandelte |
|---|---|---|---|
| | | | |
| HTP-110FF-HHT | 0,0136 | 0,0133 | 2,33 |
| HTP-110FF-LHT | 0,0157 | 0,0149 | 5,44 |
| HTP-150FF-LT | 0,0163 | 0,0130 | 25,17 |
| ENF-100-HT | 0,0270 | 0,0208 | 29,85 |

Abweichend von den vorbeschriebenen Ausführungen besteht auch die Möglichkeit, das Nanofasermaterial unter Verwendung von Jod in Toluene bzw. Methylbenzol vorzubehandeln, und zwar unter Umrühren beispielsweise mit einer Behandlungsdauer von 14 Tagen. Derart vorbehandeltes bzw. mit Jod dotiertes (J₂-dotiertes) Nanofasermaterial ergibt in Dispersion mit einem geeigneten organischen Matrix-Material, beispielsweise mit PEG wiederum eine insbesondere zur Verwendung als Wärmeleitpaste geeignete Zusammensetzung mit einem stark reduzierten Wärmewiderstand Rₜₕ.

Messungen ergaben beispielsweise für eine Zusammensetzung, die 5Gewichts% der mit Jod in Toluene vorbehandelten Nanofasern des Typs ENF-100-HT in einer PEG-Matrix enthielt, eine Reduzierung des thermischen Widerstandes Rₜₕ von nahezu 60 % gegenüber einer entsprechenden Zusammensetzung, die in der PEG-Matrix den gleichen Anteil an Nanofasern in nicht vorbehandelter Form enthielt.

Entsprechende Vergleichsmessungen sind in der nachstehenden Tabelle 5 zusammengefasst, wobei sich diese Tabelle auf Zusammensetzungen bezieht, die in der PEG-Matrix jeweils 5Gewichts% (bezogen auf das Gesamtgewicht der Zusammensetzung) an Nanofasern des Typs ENF-100-HT enthielten und bei denen die Komponenten mit einer Behandlungsdauer von 30 Min. bei 40 °C in einem Ultraschallbad behandelt bzw. gemischt wurden.

**Tabelle 5**

| | Rₜₕ (°K/W) | Verbesserung |
|---|---|---|
| | | |
| unbehandelt | 0,027 | |
| TC-Vorbehandlung | 0,0208 | 29,85 |
| Jod-Toluene Vorbehandlung | 0,0170 | 58,15 |

Beide vorbeschriebenen Methoden der Vorbehandlung haben im Vergleich Vorteile, aber auch Nachteile. So bietet die TC-Vorbehandlung den Vorteil einer relativ schnellen Reaktion und ermöglicht somit eine kurze Behandlungsdauer. Allerdings sind die für die Vorbehandlung verwendeten Materialien aggressiv, sodass Korrosions- und Verletzungsgefahr besteht.

Die Jod-Vorbehandlung führt zu wesentlich besseren Ergebnissen, insbesondere hinsichtlich der Reduzierung des Wärmewiderstandes Rₜₕ und ist auch benutzerfreundlich. Nachteilig bei diesem Verfahren ist allerdings die im Vergleich zu der TC-Vorbehandlung wesentlich längere Reaktionszeit bzw. Behandlungsdauer.

Die Erfindung sieht weiterhin vor, das Nanofasermaterial bei der Vorbehandlung mit wenigstens einer Komponente bzw. mit einem Polymer oder Copolymer zu umhüllen, um spezielle physikalische und/oder chemische Eigenschaften für die Zusammensetzung zu erreichen.

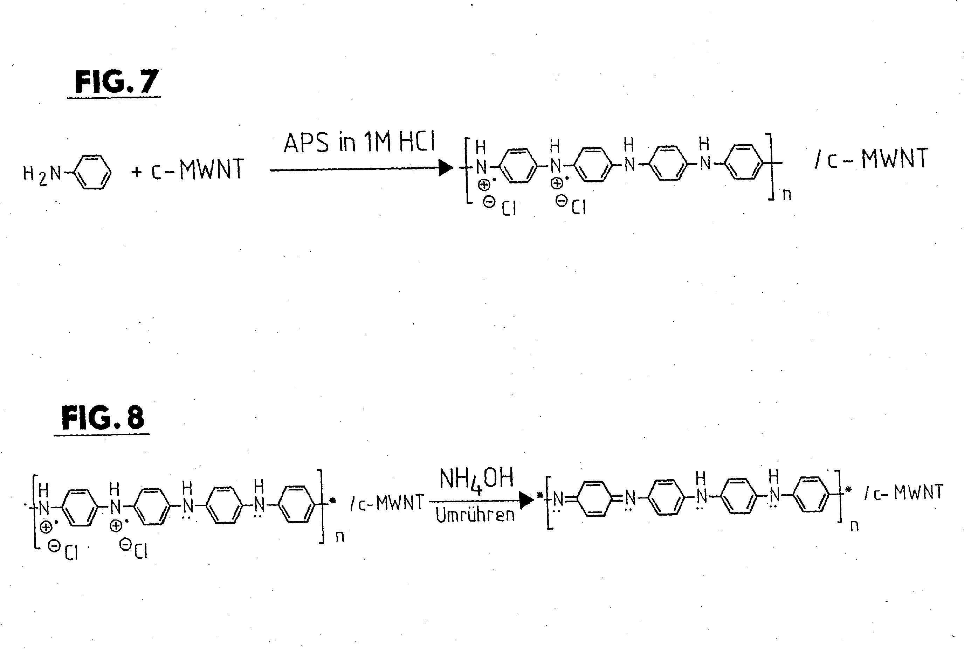

Als Umhüllung eignet sich beispielsweise eine solche auf Basis von Polyanilin. Die Umhüllung kann auf unterschiedlichste Weise realisiert werden, und zwar z.B. entsprechend der Figur 7 dadurch, dass die oberflächenbehandelten (mit TC-Vorbehandlung) Nanofasern mit ES (Emeraldin-Salz) gemischt und dann unter Verwendung von Salzsäure und Amoniumpersulfat als Polymerisationskatalysator die Umhüllung durch Polymerisation unmittelbar auf den Nanofasern erzeugt wird.

Grundsätzliche Vorteile dieser Verfahrensweise sind u. a. die Möglichkeit einer sauberen und preiswerten Fertigung sowie eine kurze Behandlungsdauer. Versuche haben gezeigt, dass trotz Umhüllung die durch die TC-Vorbehandlung der Nanofasern erzielte Reduktion des thermischen Widerstandes Rₜₕ erhalten bleibt.

In der nachstehenden Tabelle 6 ist für verschiedene Proben der Wärmewiderstand Rₜₕ (°K/W) angegeben, wobei die Proben 1 - 3 jeweils 5Gewichts% Nanofasern, bezogen auf das Gesamtgewicht in der PEG-Matrix enthielten und bei allen Proben die Nanofasern zur Herstellung der Dispersion mit dem GEG (Polyethylenglykol) 30 Min. bei 40°C in einem Ultraschallbad vermischt wurden. Bei der Probe 4 betrugt der Anteil an Nanofasern 10Gewichts%.

Weiterhin bezieht sich die Probe 1 wiederum auf die Zusammensetzung bzw. Dispersion mit nicht vorbehandelten Nanofasern, die Probe 2 auf eine Dispersion mit gemäß Figur 7 umhüllten Nanofasern, allerdings ohne TC-Vorbehandlung. Die Proben 3 und 4 betreffen Zusammensetzungen mit solchen Nanofasern, die entsprechend der Figur 2 vorbehandelt (TC-Vorbehandlung) und anschließend entsprechend der Figur 7 umhüllt wurden.

**Tabelle 6**

| Probe | Wärmewiderstand Rₜₕ (°K/W) | Verbesserung in % |
|---|---|---|
| | | |
| Probe 1 | 0,027 | |
| Probe 2 | 0,0251 | 7,408 |
| Probe 3 | 0,0204 | 31,82 |
| Probe 4 | 0,0195 | 38,09 |

Die vorstehende Tabelle 6 belegt, dass die durch die TC-Vorbehandlung der Nanofasern erzielte Reduzierung des thermischen Widerstandes Rₜₕ durch die Umhüllung mit dem Polymer auf Polyanilin-Basis nicht nur erhalten bleibt, sondern durch diese Umhüllung noch gesteigert wird. Allerdings sind die in dieser Form ummantelten Nanofasern in der PEG-Matrix nicht oder nur ungenügend lösbar, sodass mit den auf diese Weise ummantelten bzw. umhüllten Nanofasern ein stabiles Produkt nicht möglich ist.

Im Gegensatz zu einem Produkt, welches oberflächenbehandelte, aber nicht mit Polyanilin umhüllte Nanofasern aufweist und dadurch eine im Wesentliche schwarze Farbgebung besitzt, ist die Farbe der Zusammensetzung, die die entsprechend der Fig. 7 umhüllten Nanofasern enthält, dunkelgrün. Grundsätzlich sind auch bei Verwendung anderer Polymere oder Copolymere für das Umhüllen oder Umschließen des Nanofasermaterials andere Farbgebungen möglich, ohne dass dadurch die angestrebte Reduzierung des thermischen Widerstandes Rₜₕ beeinträchtigt wird.

Entsprechend der Figur 8 kann das Umschließen oder Umhüllen des Nanofasermaterials mit Polyanilin auch unter Verwendung von bzw. durch Mischen mit EB (Emeraldin Base) und NH₄OH (Salmiakgeist) erfolgen.

Untersuchungen haben ergeben, dass die so unter Verwendung von EB umschlossenen Nanofasern in verschiedenen Lösungs- bzw. Dispersionsmitteln, wie Ethylenglykol, Polyethylenglykol, NMP, THF, DMF, eine gute Löslichkeit aufweisen und zu einer stabilen Dispersion bzw. zu einem stabilen Produkt führen, und zwar mit einer blauen Farbgebung. Die Untersuchungen haben aber auch gezeigt, dass eine Reduzierung des thermischen Widerstandes Rₜₕ insbesondere auch bei Verwendung von vorbehandelten (TC-Vorbehandlung) Nanofasern nicht eintritt, für einen angestrebten niedrigen thermischen Widerstand Rₜₕ der Anteil an Nanofasern oder Nanofasermaterial in der Zusammensetzung also erhöht werden muss.

In der nachfolgenden Tabelle 7 sind wiederum für vier Proben 1 - 4 der gemessene thermische Widerstand Rₜₕ (°K/W) angegeben, wobei die Proben 1 - 3 in der PEG-Matrix jeweils 5Gewichts% an Nanofasern und die Probe 4 10Gewichts% Nanofasern enthielten. Sämtliche Proben wurden durch Mischen der Nanofasern über 30 Min. bei 40 °C in einem Ultraschallbad hergestellt, und zwar die Probe 1 unter Verwendung von nicht vorbehandelten Nanofasern, die Probe 2 unter Verwendung von nicht vorbehandelten, aber entsprechend der Figur 8 unter Verwendung von Polyanilin umhüllten Nanofasern und die Proben 3 und 4 unter Verwendung von vorbehandelten (TC-Vorbehandlung) und entsprechend der Figur 8 unter Verwendung von Polyanilin Nanofaser.

**Tabelle 7**

| Probe | thermischer Widerstand Rₜₕ (°K/W) | Verbesserung |
|---|---|---|
| | | |
| Probe 1 | 0,0270 | |
| Probe 2 | 0,0248 | 8,75 |
| Probe 3 | 0,0273 | - 1,13 |
| Probe 4 | 0,0220 | 22,54 |

Aus der vorstehenden Tabelle 7 ergibt sich, dass eine merkliche Reduzierung des thermischen Widerstandes bei vorbehandelten und entsprechend der Formel der Figur 8 unter Verwendung von Polyanilin umhüllten Nanofasern erst bei einem deutlich über 5Gewichts% liegenden Anteil an Nanofasern eintritt.

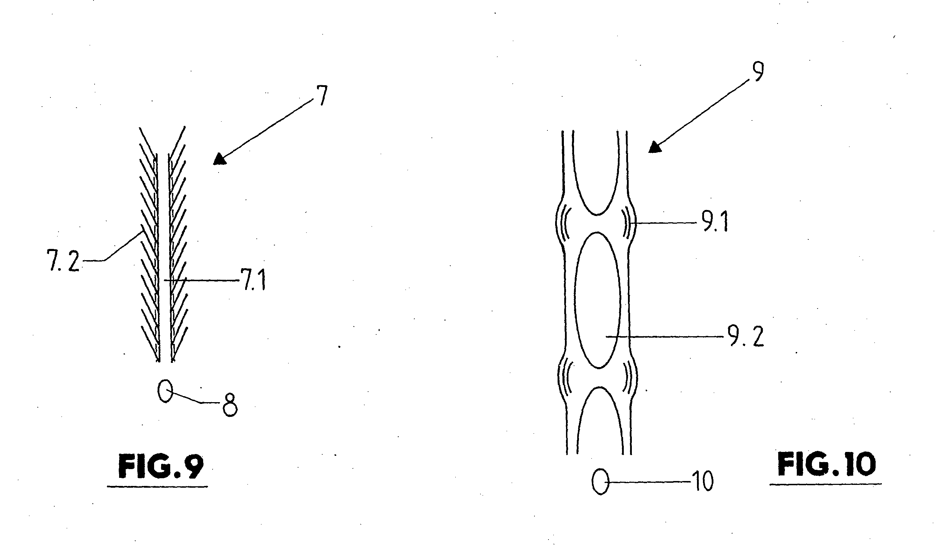

Die Figur 9 zeigt in schematischer Darstellung eine Teillänge der in dieser Figur allgemein mit 7 bezeichneten Nanofaser ENF-100-HT, und zwar zusammen mit ihrem bei der Herstellung verwendeten Wickel-Katalysator 8. Wie dargestellt, ist die Nanofaser 7 innen röhrchenförmig ausgebildet bzw. weisr dort eine röhrchenförmige Struktur 7.1 auf und an der Außenfläche eine schuppenartige Struktur 7.2, so dass die gesamte oder nahezu die gesamte Außenfläche der Nanofaser 7 die Möglichkeit zum Anbinden bzw. Andocken weiterer Komponenten bietet.

Die Figur 10 zeigt in einer schematischen Darstellung eine Teillänge der dort allgemein mit 9 bezeichneten Nanofaser HTF-110 ... und zwar zusammen mit ihrem für die Herstellung verwendeten Fe-Katalysator 10.

Die Nanofaser 9 besitzt eine bambusstangenartige Struktur mit in Faserlängsrichtung von einander beabstandeten Knoten oder Verdickungen 9.1 an der Außenfläche und mit in sich geschlossenen, in Faserlängsrichtung auf einander folgenden Hohlräumen 9.2 im Inneren der Faser. Nur die Knoten 9.1 bieten die Möglichkeit zum Ankoppeln bzw. Andocken weiterer Komponenten.

Im Zusammenhang mit der Figur 2 wurde bereits ein Verfahren beschrieben, bei dem die Nanofasern und dabei speziell auch die Nanofasern 7 zunächst mit einer anorganischen Säure und anschließend mit Thionyl Chlorid behandelt werden, so dass sich zumindest an der Außenfläche der Nanofasern Carboxyl-Gruppen bilden, bei denen durch die Thionylchlorid-Behandlung die OH-Gruppen durch Chloratome ersetzt sind bzw. Halogenwasserstoffverbindungen gebildet sind.

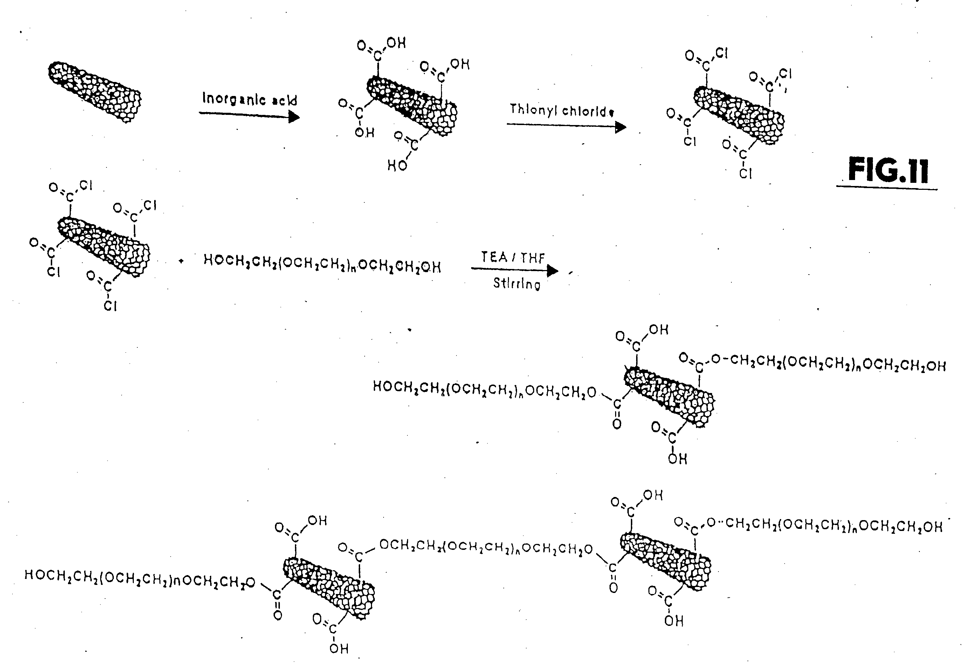

Die Figur 11 zeigt eine Weiterentwicklung dieses Verfahrens dahingehend, dass die Nanofasern nach dieser TC-Behandlung nicht, wie bei dem Beispiel der Figur 2 in die PEG-Matrix eingebracht bzw. mit diesem Matrixmaterial vermischt werden, sondern zunächst in einem weiteren Verfahrensschritt mit mit einem geeigneten Lösungsmittel verdünntem Polyethylenglykol (PEG) behandelt werden, und zwar unter ständigem Umrühren über mehrere Tage. Erst die so vorbehandelten Nanofasern werden dann in die PEG-Matrix eingebracht bzw. mit dieser vermischt, und zwar beispielsweise wiederum in einem Ultraschall-Bad mit einer Behandlungsdauer von 30 Minuten und bei einer Temperatur von 40°C und in solcher Menge, dass der Anteil an Nanofasern in der Matrix etwa 5 Gewichts% beträgt.

In der nachstehenden Tabelle 8 ist der thermische Widerstand Rth für verschiedene Zusammensetzungen oder Proben angegeben, die die Nanofaser ENF-100-HT jeweils in der PEG-Matrix enthalten, und zwar in einem Anteil von 5 Gewichts% bezogen auf das Gesamtgewicht der Zusammensetzung.

**Tabelle 8**

| Probe | Rth (°K/W) | Verbesserung |
|---|---|---|
| | | |
| Probe A | 0,027 | |
| Probe B | 0,0208 | 29,9 % |
| Probe C | 0,01581 | 70,8 % |

Die Probe A enthält die unbehandelte Nanofaser ENF-100-HT in der PEG-Matrix. Die Probe B enthält das TC-vorbehandelte Nanofasermatrial ohne weitere

Vorbehandlung und die Probe C enthält das nach dem vorstehend im Zusammenhang mit der Figur 11 beschriebenen Verfahren vorbehandelte Nanofasermaterial. Die Messungen des thermischen Widerstandes Rth wurden wiederum mit der Anordnung der Figur 1 durchgeführt, und zwar mit einer Heizspannung von 60 Volt und einem Heizstrom von 2,7 Ampere am elektrischen Heizer 2 sowie mit einem zwischen den Platten 3 und 4 auf die Schicht 6 erzeugten Anpressdruck von 3 bar.

Die Verbesserung der Wärmeleitfähigkeit durch die Vorbehandlung entsprechend der Fig. 2, insbesondere aber entsprechend der Fig 11 ist hauptsächlich darauf zurückzuführen, dass die Nanotubes bzw. Nanofasern in Längsrichtung zwar eine optimale Wärmeleitfähigkeit aufweisen, die Wärmeleitfähigkeit in Querrichtung bei unbehandelten Nanofasern bzw. Nanotubes aber stark reduziert ist, insbesondere auch ein hoher Wärmeübergangswiderstand zwischen sich seitlich berührenden Nanofasern bzw. Nanotubes besteht. Durch die Vorbehandlung erfolgt eine optimale Einbindung des Nanofasermaterials in die Matrix, so dass auch in Nanotube- oder Nanofaser-Querrichtung die Wärmeleitfähigkeit bzw. der Wärmeübergang zwischen benachbarten Nanofasern oder Nanotubes wesentlich reduziert wird.

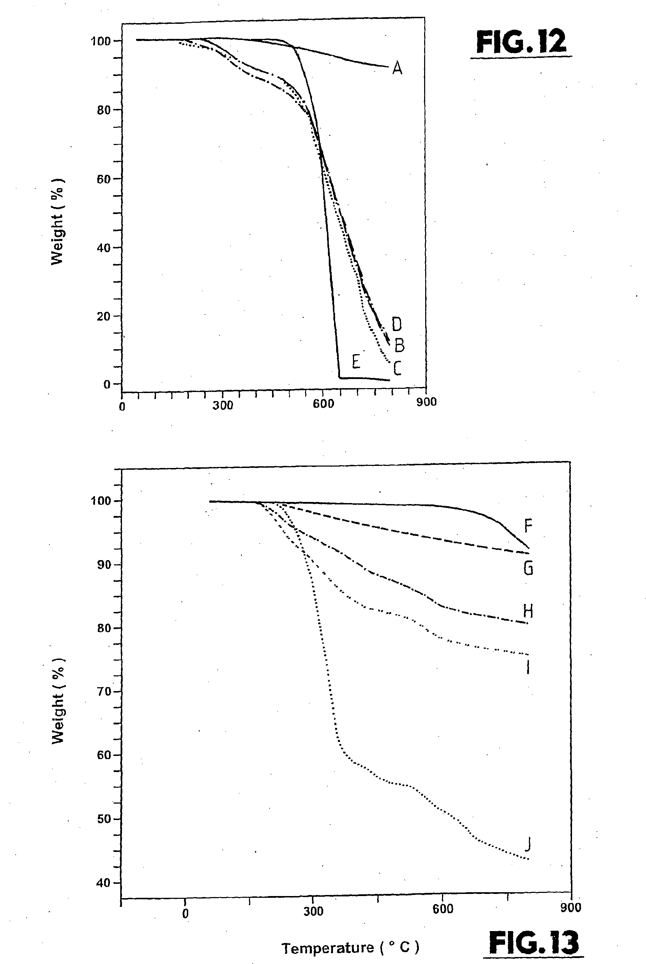

Die Figur 12 zeigt in einem TGA-Diagramm die Massendekomposition in Abhängigkeit von der Temperatur für verschiedene Zusammensetzungen A - D. In diesem Diagramm sind den Kurven A - D folgenden Zusammensetzungen zuzuordnen, wobei der Anteil an Nanofasermaterail wiederum 5 Gewichts% beträgt:

| | |
|---|---|
| *Kurve A:* | *TC-vorbehandeltes Nanofasermaterial ENF-100-HT, d.h. Nanofasermaterial nach der Vorbehandlung entsprechend* *Figur 2**;* |
| Kurve B: | mit dem Verfahren der Figur 11 vorbehandeltes Nanofasermaterial ENF-100-HT in der PEG-Matrix; |
| *Kurve C:* | *mit dem Verfahren der* *Figur 2* *vorbehandeltes Nanofasermaterial ENF-100-HT in der EPG-Matrix;* |
| Kurve D: | Nanofasermaterial ENF-100-HT in einer Ethylenglykol-Matrix; |
| *Kurve E:* | *Nanofasermaterial ENF-100-HAT ohne Vorbehandlung und in keiner Matrix.* |

Von besonderer Bedeutung ist die Kurve A, aus der sich ergibt, dass das carboxylierte bzw. TC-vorbehandelte Nanofasermaterial eine extrem hohe Temperatur- oder Feuerfestigkeit aufweist. Zurückzuführen ist dies offensichtlich darauf, dass insbesondere durch die Vorbehandlung mit der anorganischen Säure die Katalysator-Reste, d.h. bei der Nanofaser ENF-100-HT die Nickel-Reste entfernt und ausgewaschen werden und außerdem die sich durch die Vorbehandlung insbesondere an den Oberflächen des Nanofasermaterial bildenden Halogenverbindungen bzw. deren Halogen Cl flammhemmend wirken. Ein gleicher Effekt ist durch eine Behandlung des Nanofasermaterials mit Bor oder Jod erreichbar. Durch die Halogene Chlor, Bor und Jod wird eine Verbesserung der thermischen Resistenz bzw. Temperatur- oder Feuerfestigkeit auch der Zusammensetzung insgesamt erreicht.

Weiterhin lässt sich durch eine der Behandlung der Figur 2 entsprechende Behandlung oder eine entsprechenden Jod- oder Bor-behandlung eine Verbesserung der Temperatur- oder Feuerfestigkeit von Grafit allgemein erreichen, und ebenfalls zwar entsprechend der Kurve A.

Die Carboxyl-Behandlung oder die Behandlung mit Bor oder Jod von Grafit eröffnen somit die Möglichkeit, verschiedenste Produkt aus Grafit hinsichtlich ihrer Feuerfestigkeit bzw. Hitze- bzw. Flammbeständigkeit zu verbessern, so beispielsweise auch die Lebensdauer bzw. Abbrandfestigkeit von in der Regel aus Grafit hergestellte Bürsten von elektrischen Komutatormotoren usw.

Die Figur 13 zeigt in einem TGA-Diagramm die Massendekomposition in Abhängigkeit von der Temperatur wiederum bei verschiedenen Zusammensetzungen FJ. In diesem Diagramm sind den Kurven folgende Zusammensetzungen zuzuordnen, wobei als Nanofasermaterialpristine HTP-110 FF-LT verwendet wurde:
- Kurve F:: unbehandeltes Nanofasermaterial,
- Kurve G:: carboxyliertes Nanofasermaterial,
- Kurve H:: mit Ethylenglykol behandeltes Nanofasermaterial,
- Kurve I:: mit PEG behandeltes Nanofasermaterial,
- Kurve J:: mit PEG monolacurate behandeltes Nanofasermaterial.

Aus den Diagrammen der Figur 13 ist ersichtlich, dass die Probe H bei der maximalen Temperatur der Messung den geringsten Gewichtsverlust aufweist.

Die Messwerte lassen sich, wie folgt, zusammenfassen:

**Tabelle 9**

| Probe | Zeit (Stunden) | Temperatur (°C) | maximale Temperatur | Gewichts% |
|---|---|---|---|---|
| | | | | |
| H | 48 | 80 | 182 | 8 |
| I | 48 | 80 | 180 | 13,23 |
| J | 48 | 80 | 215 | 39,8 |

Es wurde weiterhin noch die Lösbarkeit der Proben H,I und J in verschiedenen Lösungsmitteln, nämlich Chloroform, Aceton, THF und destilliertes Wasser gemessen. Die Lösbarkeit ist in der nachfolgenden Tabelle zusammengefasst:

**Tabelle 10**

| Probe | Chloroform | Aceton | THF | destilliertes Wasser |
|---|---|---|---|---|
| | | | | |
| H | >5 Tage | >5 Tage | | >5 Tage |
| I | <5 Tage | >5 Tage | >5 Tage | >5 Tage |
| J | <5 Tage | >5 Tage | >5 Tage | nicht lösbar |

Die für die Bestimmung der Lösbarkeit verwendeten Dispersionen wurden dabei durch Behandlung mit Ultraschall über 30 Minuten und bei 30 °C hergestellt.

Die in der Figur 12 wiedergegebenen Messwerte lassen sich wie folgt zusammenfassen:

**Tabelle 11**

| Probe | Zeit (Stunden) | Temperatur (°C) | maximale Temperatur der Kunststoffnanofasern | Maximum der Dekompositions-temperatur | Gewichts% |
|---|---|---|---|---|---|
| | | | | | |
| B | 48 | 80 | 548 | 266 | 10 |
| C | 48 | 80 | 556 | 213 | 13 |
| D | 48 | 80 | 536 | 170 | 10,5 |

Dabei sind TₘₐₓCNT die maximale Dekompositionstemperatur des Nanofasermaterials und Tₘₐₓ reagent die maximale Dekompositionstemperatur des Behandlungsmediums.

Die Löslichkeit der verschiedenen Proben in Chloroform, Aceton, THF sowie in destilliertem Wasser ist in der nachstehenden Tabelle 12 zusammengefasst:

**Tabelle 1**

| Probe | Chloroform | Aceton | THF | destilliertes Wasser |
|---|---|---|---|---|
| | | | | |
| B | >30 Tage | >30 Tage | | >30 Tage |
| C | <5 Tage | >10 Tage | >10 Tage | >10 Tage |
| D | <5 Tage | >10 Tage | >10 Tage | nicht mischbar |

Die entsprechenden Dispersionen wurden mit einer Ultraschallbehandlung über 30 Minuten und bei 30 °C hergestellt.

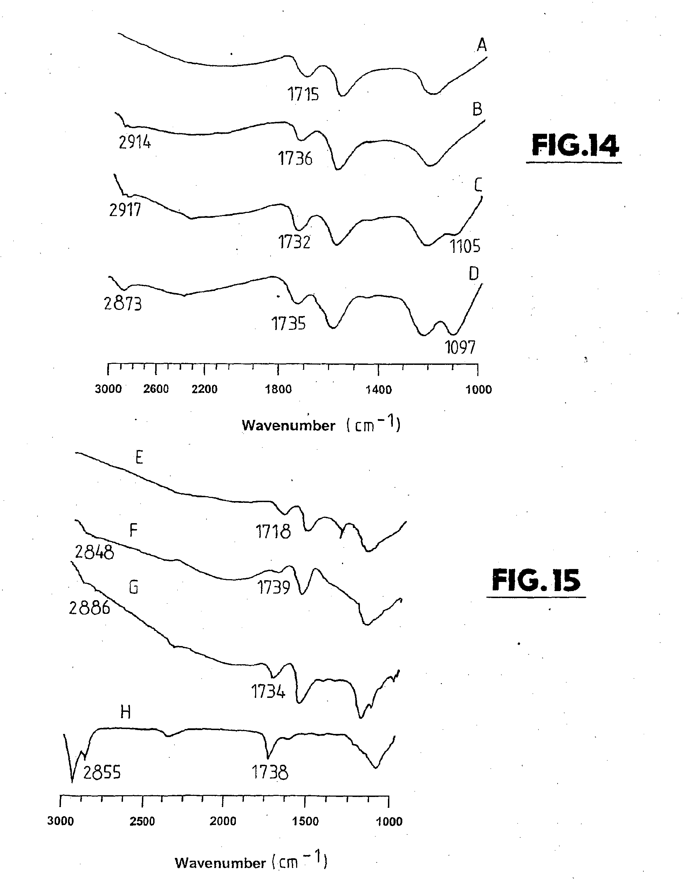

Die Figuren 14 und 15 zeigen Infrarotspektren für verschiedene Proben, und zwar jeweils:
- Kurve A:: Carboxylierte bzw. TC-vorbehandelte Nanofasern ENF-100-HT,
- Kurve B:: mit Ethylenglykol vorbehandelte Nanofasern ENF-100-HT,
- Kurve C:: mit PEG monolacurate vorbehandelte Nanofasern ENF-100-HT,
- Kurve D:: mit PEG vorbehandelte Nanofasern ENF-100-HT

- Kurve E:: Carboxylierte bzw. TC-vorbehandelte Nanofasern HTP-110FF-LHT,
- Kurve F:: mit PEG vorbehandelte Nanofasern HTP-110FF-LHT,
- Kurve G:: mit Ethylenglykol vorbehandelte Nanofasern HTP-110 FF-LHT,
- Kurve H:: mit PEG monolacurate vorbehandelte Nanofasern HTP-110 FF-LHT.

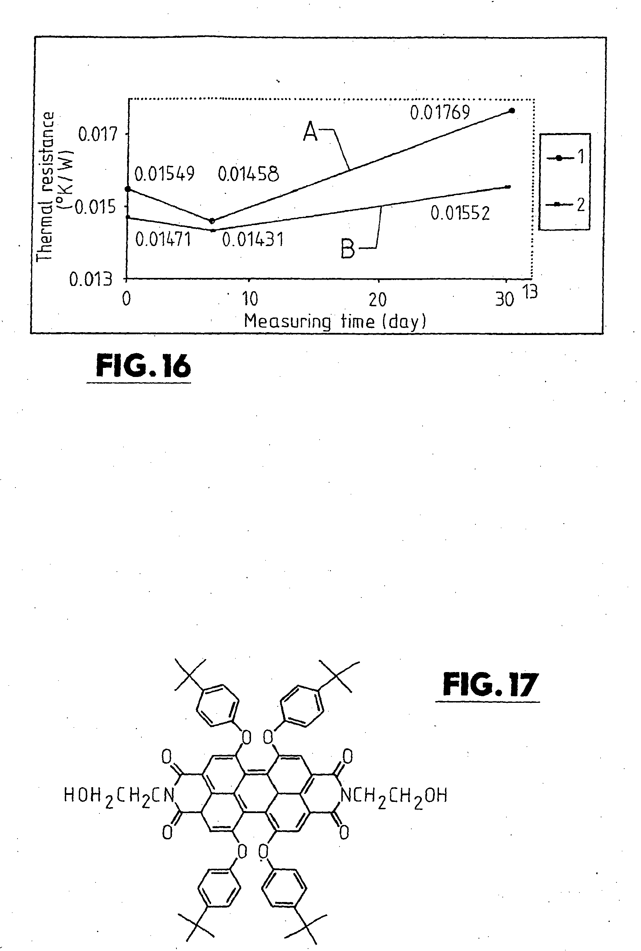

Die Figur 16 zeigt die zeitliche Änderung des thermischen Widerstandes Rth von zwei unterschiedlichen Zusammensetzungen, die das Nanofasermaterial jeweils in einer PEG-Matrix enthalten. Die Kurve A ist dabei der Verlauf bei einer Zusammensetzung, die Nano-Fasermaterial HTF-110-LHT in unbehandelter Form enthält. Die Kurve B der Figur 15 zeigt die die zeitliche Änderung des thermischen Widerstandes Rth für eine Zusammensetzung, die in einer PEG-Matrix das entsprechend der Figur 11 vorbehandeltes Nanofasermaterial und dabei speziell Nanofasermatrial mit Nanofasern des Typs HTF-110 FF-LHT enthält.

Durch die Zugabe geeigneter Pigmente bzw. kleiner Moleküle lässt sich nicht nur die Farbgebung der Zusammensetzung verändern, sondern u.U. auch eine Verbesserung der thermischen Leitfähigkeit bzw. eine Reduzierung des thermischen Widerstandes Rth erreichen.

In der Figur 17 ist die chemische Formel für ein derartiges, zur Verwendung bei dem erfindungsgemäßen Zusammensetzung geeignetes Pigment in Form von Perylene dargestellt. Durch die Zugabe dieses Pigments erhält die Zusammensetzung eine leicht rötliche Einfärbung.

In der nachstehenden Tabelle 13 sind für verschiedene Muster oder Proben jeweils die Zusammensetzung und der gemessene Wärmewiderstand Rth angegeben. Verwendet wurde hierbei ein Nanofasrmaterial HTF-150 FF-HAT in einer PEG-Matrix. Die jeweilige Probe wurde durch Mischen in einem Ultraschall-Bad über 35 Minuten und bei 40°C hergestellt. Die in der Tabelle 13 angegebenen Werte sind jeweils Mittelwerte aus drei Einzelmessungen. Durchgeführt wurden die Messungen wieder mit der Anordnung der Figur 1, und zwar mit einer Heizspannung von 60 Volt, einem Heizstrom von 2,7 Ampere und einem Anpressdruck von 3 Bar.

**Tabelle 13**

| Probe | Anteil Perylene in Gewichts% | Anteil Nanofasermaterial in Gewichts% | Anteil Matrix Material | Rth (°K/W) | Verbesserung |
|---|---|---|---|---|---|
| A | 0 | 5 | 95 | 0,01673 | |
| B | 2,5 | 5 | 92,5 | 0,01928 | - 13,2 |
| C | 1 | 5 | 94 | 0,01595 | + 4,8 |
| D | 0,5 | 5 | 94,5 | 0,0187 | - 10,5 |

Bei einem Perylene-Anteil zwischen 0,5 und 2,5 Gewichts% tritt eine noch im Rahmen der Zulässigkeit liegenden Verschlechterung der thermischen Leitfähigkeit der Zusammensetzung ein. Bei einem Perylene-Anteil von etwa 1 Gewichts% wird aber sogar eine Verbesserung der wärmeleitfähigkeit erreicht.

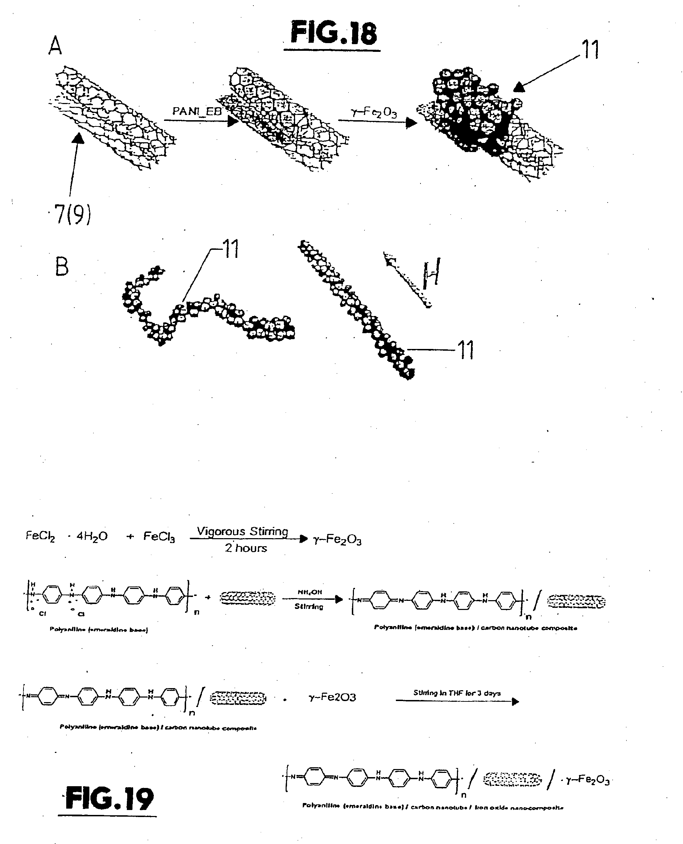

Eine spezielle, besonders vorteilhafte Ausführung der Erfindung sieht vor, dass die Nanotubes oder Nanofasern des Nanofasermaterials mit einem als Oberflächen-Haftmittel dienenden Polymer überzogen und dann das Nanofasermaterial mit Nanopartikeln aus einem ferromagnetischen Werkstoff, beispielsweise mit Nanopartikeln aus γ-Fe₂O₃ beschichtet werden. Als Haftgrund eignet sich beispielsweise Polyanilin. Das Nanofasermaterial ist beispielsweise unbehnandelt oder wurde einer Vorbehandlung unterzogen, beispielsweise einer Vorbehandlung entsprechend der Figur 2 oder 11. Die Figure 18 zeigt in der Position A dieses Beschichten der Nanofasern, beispielsweise der Nanofaser 7 des Typs ENF 100-HT mit dem ferromagnetischen Werkstoff γ-Fe₂O₃.

In der Position B der Figur 18 ist dargestellt, wie die so ferromagnetischen Nanofasern 11 mit einem zunächst willkürlichen Verlauf und/oder einer zunächst willkürlichen Anordnung und Formgebung, beispielsweise mit einer für die Nanofaser ENF 100-HT typischen wendelartigen Formgebung, durch ein äußeren Magnetfeld (dargestellt durch den Pfeil H) entlang der Magnetlinien ausgerichtet werden.

Hierdurch eröffnet sich eine Vielzahl von Anwendungen. So ist es beispielsweise möglich mit derartigen, ferromagnetisch beschichteten Nanofasern 11 oder Nanotubes unter Verwendung eines geeigneten Matrix-Materials eine Wärmleitpaste herzustellen, die im Anwendungsfall in der üblichen Weise am Übergang oder Anschlußbereich zwischen zwei benachbarten Wärme übertragenden Flächen, beispielsweise zwischen einer zu kühlenden Fläche und einer Fläche einer Wärmesenke vorgesehen wird. Nach dem Aufbringen und gegebenenfalls nach dem Verbinden oder Anschließen der beiden Flächen werden durch ein äußeres Magnetfeld die Nanofasern in der Wärmleitpaste bzw. in der Zusammensetzung so ausgerichtet, dass sie mit ihrer Längserstreckung in Richtung des Wärmeflusses orientiert sind und somit eine optimale Wärmeleitfähigkeit 1/Rth erreicht ist. Durch Aushärten oder Polymerisieren der Matrix werden dann die ferromagnetisch beschichteten und im äußeren Magnetfeld ausgerichteten Nanofasern in dieser Orientierung fixiert.

Das für die Matrix verwendete Material ist beispielsweise so gewählt, dass es im ausgehärteten bzw. polymerisierten Zustand hart oder gummielastisch ist, so dass im letzten Fall thermisch bedingte Abstands- und/oder Längenänderungen und/oder Relativ- und/oder Ausgleichsbewegungen zwischen den für die Wärmeübertragung vorgesehenen Flächen möglich ist. Als Matrix eigenen sich beispielsweise bei Umgebungstemperatur aushärtende Kunststoffe, insbesondere auch elastomere Kunststoffe, auch solche aus mehreren Komponenten, durch Hitzeeinwirkung oder UV-Licht aushärtende Kunststoff usw.

Mit den ferromagnetisch beschichteten Nanofasern 11 lassen sich durch das Ausrichten dieser Fasern in einem äußeren Magnetfeld auch Materialien herstellen, die in einer vorgegebenen oder bevorzugten Achsrichtung eine erhöhte thermische Leitfähigkeit, über die ausgerichteten Nanofasern gegebenenfalls auch eine erhöhte elektrische Leitfähigkeit aufweisen, wobei die ferromagnetisch beschichteten Nanofasern 11 in ihrem durch das äußere Magnetfeld ausgerichteten Zustand durch Aushärten der entsprechenden Matrix oder durch eine entsprechend hohe Viskosität des Matrix-Materials eingefroren bzw. fixiert sind. So ist beispielsweise hierdurch die Herstellung von Platten, auch mit gummielastischen Eigenschaften möglich, die dann anstelle oder zusätzlich zu einer Wärmeleitpaste als Übergangsoder Anschlussmaterial zwischen zwei in einem Wärmeflussweg einander benachbarten Flächen vorgesehen wird.

Durch die Anordnung der ferromagnetisch beschichteten Nanofasern in einer flüssigen oder viskosen Matrix lässt sich durch Anlegen oder Ändern eines oder mehrerer äußerer Mangetfelder auch eine Steuerung der Wärmeleitfähigkeit oder der elektrischen Leitfähigkeit erreichen, beispielsweise in einem die elektrische Leitfähigkeit und/oder die thermische Leitfähigkeit steuerndes Modul usw.

In der Figur 19 ist ein Verfahren dargestellt, mit dem die Beschichtung des Nanofasermaterials mit γ-Fe₂O₃ durchgeführt werden kann.

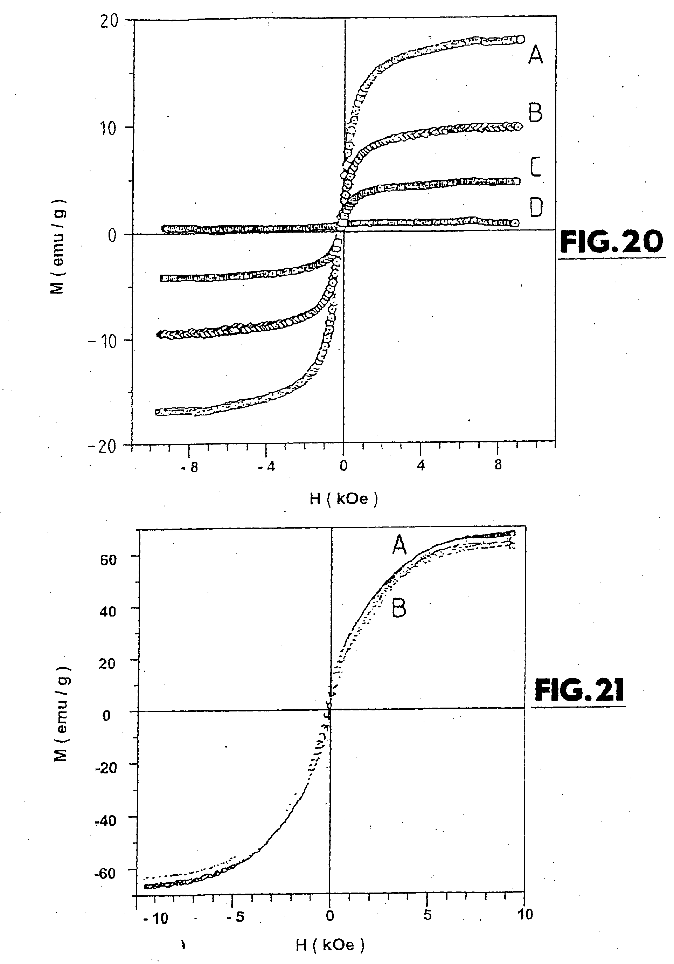

Die Figur 20 zeigt in einem Magnetisierungsdiagramm die Magnetisierung M in Abhängigkeit von der magnetischen Feldstärke H, wobei die Magnetisierung M als spezifisches Magnetisierungsprogramm angegeben ist. Weiterhin ist die Magnetisierung M abhängig von dem Anteil an Fe₂O₃ in Gewichts%. Als Nanofasermaterial ist HTP-150FF-LT verwendet, und zwar bei den Kurven A, B und C jeweils mit einem unterschiedlichen Anteil (in Gewichts%) an Fe₂O₃. Die Kurve D bezieht sich auf das Nanofasermaterial Pristine HTP-150FF-LT ohne Fe₂O₃. Auch andere ferromagnetische Materialien sind zur Beschichtung des Nanofasermaterials geeignet, so beispielsweise Kobalt.

Die Figur 21 zeigt nochmals im Vergleich die Magnetisierungskurve des mit Eisenoxyd beschichteten Nanofasermaterials (Kurve B) und die Magnetisierungskurve des Nanofasermaterial mit Kobalt (Kurve A). Das Nanofasermaterial ist wiederum Pristine HTP-150FF-LT.

Wegen der überragenden magnetischen Eigenschaften ist das ferromagnetisch beschichtete Nanofasermaterial zusätzlich zu den vorstehend bereits genannten Anwendungen für eine Vielzahl weiterer Anwendungen geeignet, beispielsweise in Speichermedien für unterschiedlichste Anwendungen, z.B. in elektrischen und elektronischen Geräten, z.B. zum Speichern von Daten unterschiedlichster Art, im medizinischen Bereich, insbesondere für diagnostische Anwendungen usw.

Das mit dem ferromagnetischem Material beschichtete Nanofasermaterial, welches bei geringem Gewicht eine hohe Magnetisierung zulässt, weist zwar im ursprünglichen Zustand im Vergleich zu dem nicht beschichteten Nanofasermaterial eine reduzierte thermische Leitfähigkeit auf, diese kann aber durch Ausrichten der ferromagnetischen Nanofasern im Magnetfeld ganz wesentlich erhöht werden, sodass die Leitfähigkeit dann weit über derjenigen liegt, die das nicht ferromagnetisch beschichtete Nanofasermaterial besitzt.

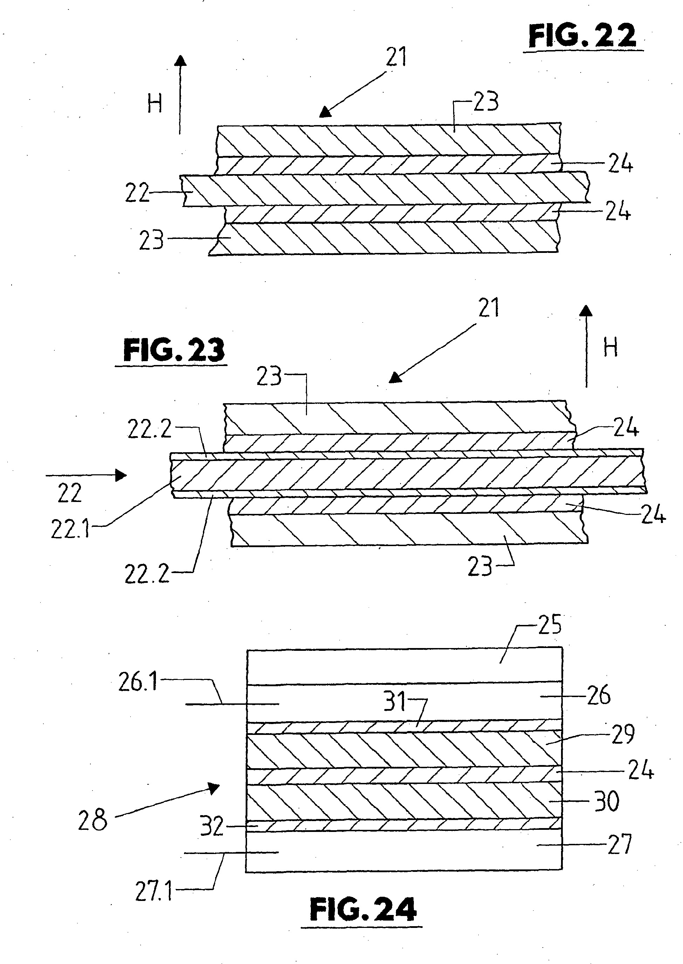

In der Figur 22 ist 21 ein Mehrschicht-Material in Form einer Leiterplatte für elektrische Schaltkreise oder Module. Das Mehrschichtmaterial besteht einem plattenförmigen Träger oder Substrat 22, welches bei dieser Ausführungsform insgesamt aus einem elektrisch isolierenden Werkstoff gefertigt ist, z. B. aus einer Keramik, wie z. B. Aluminiumoxid-Keramik, Aluminiumnitrid-Keramik, Siliziumnitrid-Keramik usw. Auch andere Werkstoffe sind für das Substrat 22 denkbar, beispielsweise Kunststoff, z. B. auf Epoxy-Basis usw.

Auf einer Oberflächenseite des Substrates 22 ist flächig eine von einer dünnen Metallplatte oder Folie, beispielsweise von einer Kupferplatte oder Kupferfolie gebildete Metallisierung 23 vorgesehen. Diese Metallisierung 23 ist über eine von einem Kleber oder einem Bondmaterial gebildete und als Kleberschicht ausgeführte Bondschicht 24 flächig mit dem Substrat 22 verbunden. Bei der dargestellten Ausführungsform ist das Substrat 22 an beiden Oberflächenseiten mit der Metallisierung 23 versehen. Das Verbund- oder Mehrschicht-Material 21 ist dadurch zumindest hinsichtlich Art und Folge der einzelnen Schichten symmetrisch bezogen auf eine Mittelebene des Substrates 22. Grundsätzlich ist es aber möglich die Metallisierung 23 nur an einer Oberflächenseite des Substrats 22 vorzusehen. Zur Herstellung der Leiterbahnen, Kontaktflächen usw. ist dann zumindest die Metallisierung 23 an einer Seite des Substrates 22 unter Verwendung der üblichen bekannten Ätz- und Maskierungstechniken entsprechend strukturiert.

Wie in der Figur 23 dargestellt, ist es weiterhin auch möglich das Substrat 22 selbst mehrschichtig auszubilden, und zwar bestehend aus einer metallischen Tragschicht 22.1 z. B. aus Aluminium und einer isolierenden Schicht 22.2 an den Oberflächenseiten des plattenförmigen Substrates 22, und zwar dort wo über eine Bondschicht 24 eine Metallisierung 23 anschließt.

Eine Besonderheit des Mehrschichtproduktes 21 besteht darin, dass die Bondschicht 24 von einer Zusammensetzung gebildet ist, bei der die Matrix von einer als Kleber geeigneten Matrixkomponente ist, beispielsweise eine Epoxydharz-Matrix ist und in dieser Matrix das vorbehandelte Nanofasermaterial enthält, sodass sich für die Klebeschicht 24 ein extrem niedriger Wärmewiderstand Rth bzw. umgekehrt eine hohe Wärmeleitfähigkeit 1/Rth ergeben. Das Mehrschichtmaterial 21 mit einem Substrat 22 aus einer Aluminiumoxyd-Keramik ist somit bezüglich der thermischen Leitfähigkeit bzw. des thermischen Widerstandes zwischen der oberen und unteren Metallisierung 23 durchaus vergleichbar mit einem Mehrschichtmaterial ist, bei dem die Metallisierungen unter Verwendung des DCB-Verfahrens auf das Keramiksubstrat aufgebracht sind, wie dies nachstehend noch näher erläutert wird. Die Matrix enthält bezogen auf das Gesamtgewicht des Klebers oder Bondmaterials etwa 5 bis 30 Gewichts% an Nanofasermaterial.

Bei einer bevorzugten Ausführungsform wird als Nanofasermaterial eine unter der Bezeichnung "Pyrograf III" im Handel erhältliche Carbon-Nanofaser verwendet. Diese wird vor dem Einmischen in die Matrix, gfs. auch vor einer Vorbehandlung bei 3000°C ausgeheizt. Als Matrix wird eine solche auf Epoxy-Basis, beispielsweise Polyester verwendet. Um u.a. ein optimales Einbinden des Nanofasermaterials in das Matrixmaterial zu erhalten, wird ein Lösungsmittel verwendet. Hierfür eignet sich insbesondere Triethyleneglykol Monobutylether.

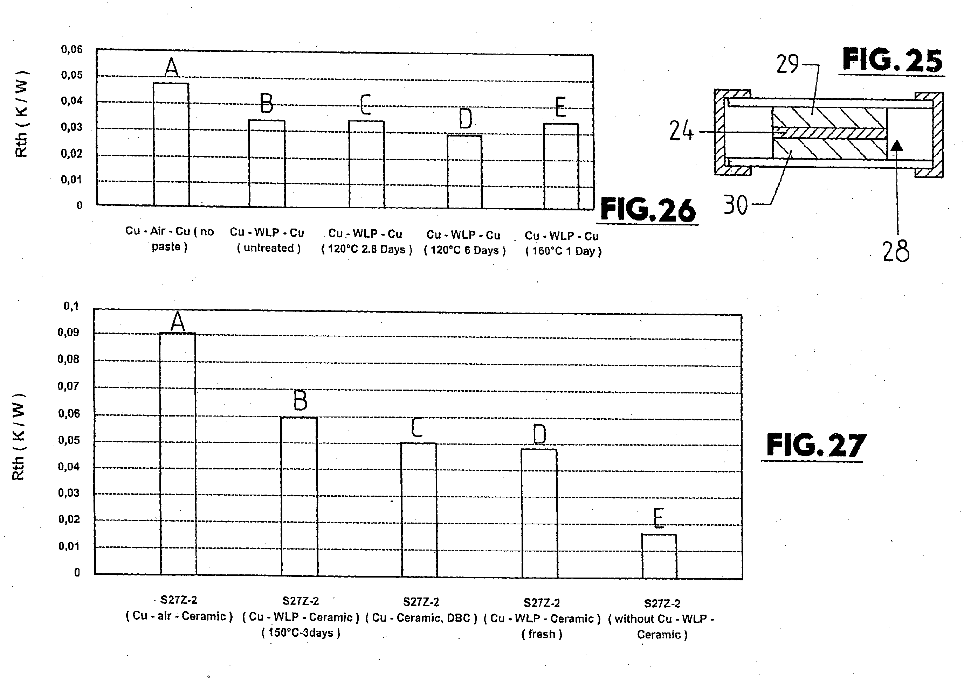

Die Figuren 24 und 25 zeigen in schematischer Darstellung nochmals eine Anordnung zur Messung des durch die Bond2schicht 24 bedingten thermischen Widerstandes. Die Anordnung besteht aus einer oberen Heizplatte 25, aus einer an diese Heizplatte anschließenden und mit dieser für eine Wärmeübertragung optimal verbundenen Messplatte 26 sowie aus einer unteren Messplatte 27. An den Messplatten 26 und 27 sind Temperaturfühler bzw. -sensoren 26.1 bzw. 27.1 vorgesehen, mit deren Hilfe die Temperatur dieser Platten exakt erfasst und als Messwerte an eine Mess- oder Auswertelektronik weitergeleitet werden können. Die Heizplatte 25 wird elektrisch betrieben, und zwar beispielsweise mit einer Heizspannung von 60 Volt und mit einem konstanten Heizstrom von beispielsweise 2,7 Ampere, sodass während des Messvorgangs von der Heizplatte 25 eine genau definierte, konstante Wärmemenge erzeugt wird.

Zwischen den beiden Messplatten 26 und 27 ist der jeweilige Prüfling 28 angeordnet, der aus zwei Kupferplatten 29 und 30 besteht, die über die ausgehärtete Klebeschicht 24 miteinander verbunden sind. Um einen möglichst verlustfreien Wärmeübergang zwischen dem Prüfling 28 und den Messplatten 26 und 27 zu erreichen, ist zwischen den Messplatten 26 und 27 und den benachbarten Platten 29 und 30 jeweils eine Schicht 31 bzw. 32 aus einer herkömmlichen, insbesondere auch hinsichtlich ihrer Eigenschaften bekannten Wärmeleitpaste vorgesehen.

Der thermische Widerstand Rₜₕ ist dabei, wie folgt, definiert:
Rₜₕ (°K/W) = (T1 - T2) / Leistung des Heizers 5 in W. Die thermische Leitfähigkeit ist dann 1/Rth.

Die Figur 26 zeigt in einer Graphik den bei der Messung ermittelten Wärmewiderstand Rth in °K/W für verschiedene Proben, und zwar:
- Position A:: bei aufeinander liegenden, nicht durch die Bondschicht 24 verbundenen Platten 9 und 10;
- Position B - E:: jeweils bei über die Bondschicht 24 miteinander verbundenen Platten 9 und 10, jedoch:
- Position B:: ohne weitere Temperaturbehandlung;
- Position C:: bei einer Behandlung der Probe 8 über 2,8 Tage bei einer Temperatur von 120 °C;
- Position D:: bei einer Behandlung der Probe 8 über 6 Tage bei einer Temperatur von 120 °C;
- Position E:: bei einer Behandlung der Probe 8 über 1 Tag bei 160 °C.

Die Figur 26 zeigt, dass sich die thermische Leitfähigkeit der Bondschicht 24 bei einer längeren Temperatureinwirkung verbessert, offensichtlich durch weiteres Aushärten dieser Schicht. Die Messungen haben weiterhin ergeben, dass der an der jeweiligen Probe 28 gemessene thermische Widerstand Rth nur anfänglich, d.h. in einer Anfangsphase jeder Messung leicht abnimmt, und zwar offensichtlich bedingt durch Trägheit des Messsystems, dann nach Ablauf dieser Anfangsphase aber konstant bleibt.

Die Figur 27 zeigt im Vergleich den thermischen Widerstand eines Kupfer-Keramik-Mehrschichtmaterials. Für diese Messung wurden anstelle der Proben 28 mit den beiden Kupferplatten 29 und 30 Proben verwendet, bei denen die untere Kupferplatte 30 durch eine Keramikplatte oder durch ein Keramiksubstrat gleicher Größe ersetzt ist. Dargestellt ist in der Figur 24 in der Position A der thermische Widerstand Rth (°K/W) einer Probe, bei der die obere Platte 29 aus Kupfer ohne Verbindung gegen die untere Platte 30 aus Keramik (Aluminiumoxid-Keramik) anliegt. Die Positionen B und D betreffen Messungen, bei denen die obere Platte 29 aus Kupfer über die Bondschicht 24 mit der unteren Platte 30 aus Keramik verbunden ist, und zwar
Position B - bei einer Behandlung der Probe 28 über 3 Tage bei einer Temperatur von 150°C und
Position D - E ohne eine weitere Behandlung der Probe 28.

Die Position C zeigt im Vergleich den thermischen Widerstand eines DCB-Substrates. Die Position E ist der mit der Messvorrichtung der Figur 21 gemessene thermische Widerstand, der sich ohne eine Probe 28 ergibt, d. h. bei unmittelbar über die Schichten 31 und 32 gegeneinander anliegenden Messplatten 26 und 27.

Es versteht sich, dass bei allen Messungen jeweils Platten 29 und 30 gleicher Größe verwendet wurden.

Die thermische Leitfähigkeit der Bondschicht 24 kann wesentlich noch dadurch gesteigert werden, dass die Nanofasern des verwendeten Nanofasermaterials hinsichtlich ihrer Länge optimal gewählt werden, d. h. diese Fasern oder zumindest ein Großteil dieser Fasern eine Länge zwischen 1 und 100 µ, vorzugsweise 10µ aufweist. Diese Länge entspricht den üblicherweise bei Keramiksubstraten und/oder Kupferfolien vorhandenen Oberflächenunebenheiten, so dass diese Unebenheiten mit Nanofasern dieser Längen möglichst optimal überbrückt werden können.

Das Nanofasermaterial ist in der vorstehend beschriebenen Weise vorbehandelt und durch diese Vorbehandlung in die das Bondmaterial bildende Matrix optimal eingebunden.

Eine weitere Verbesserung der thermischen Leitfähigkeit der Bondschichten 24 und damit eine Verbesserung der thermischen Eigenschaften des Mehrschichtmaterials 21 wird dadurch erreicht, dass die Nanofasern oder Nanotubes zumindest zum Großteil in Richtung des Wärmeflusses orientiert werden, beispielsweise dadurch, dass die Nanofasern oder Nanotubes vor dem Einbringen in die Matrix in der vorbeschriebenen Weise ferromagnetisch ausgebildet, d. h. mit den Nanopartikeln aus dem ferromagnetischen Material überzogen werden. Beim Herstellen des Mehrschichtmaterials 21 erfolgt dann durch ein äußeres Magnetfeld (Pfeil H) ein optimales Ausrichten der Nonofasern bzw. Nanotubes in der Weise, dass diese Nanofasern bzw. Nanotubes mit ihrer Längserstreckung senkrecht oder zumindest annähernd senkrecht zu den Oberflächenseiten des Substrates 22 und der benachbarten Metallisierung 23 in der Bondschicht 24 orientiert sind. Nach dem Aushärten der Bondschicht 24 sind die Nanofasern bzw. Nanotubes in dieser Orientierung fixiert.

Eine weitere Verbesserung der thermischen Eigenschaften des Mehrschichtmaterials 21 lässt sich durch eine Kompression der Bondschicht 24 nach dem Aushärten erreichen, und zwar beispielsweise durch Hippen (HIP-Verfahren) oder durch eine Behandlung im Vakuum, um so eventuell in der jeweiligen Bondschicht 24 vorhandene Blasen oder Hohlräume zu schließen.

Die Zusammensetzung bzw. das Bondmaterial können nicht nur für die Herstellung von Mehrschichtmaterialien bzw. -substraten, sondern auch generell für alle Anwendungen eingesetzt werden, bei denen eine klebende Verbindung zwischen zwei Komponenten bei gleichzeitiger optimaler Wärmeübertragung erforderlich ist. Durch das Nanofasermaterial auf Carbon- oder Kohlenstoffbasis ist das Bondmaterial auch elektrisch leitend, es kann somit in optimaler Weise auch als elektrisch leitender Kleber, d. h. überall dort eingesetzt werde, wo eine elektrische Verbindung durch Kleben gewünscht oder erforderlich ist, beispielsweise beim Bestücken von Leiterplatten mit Bauteilen usw.

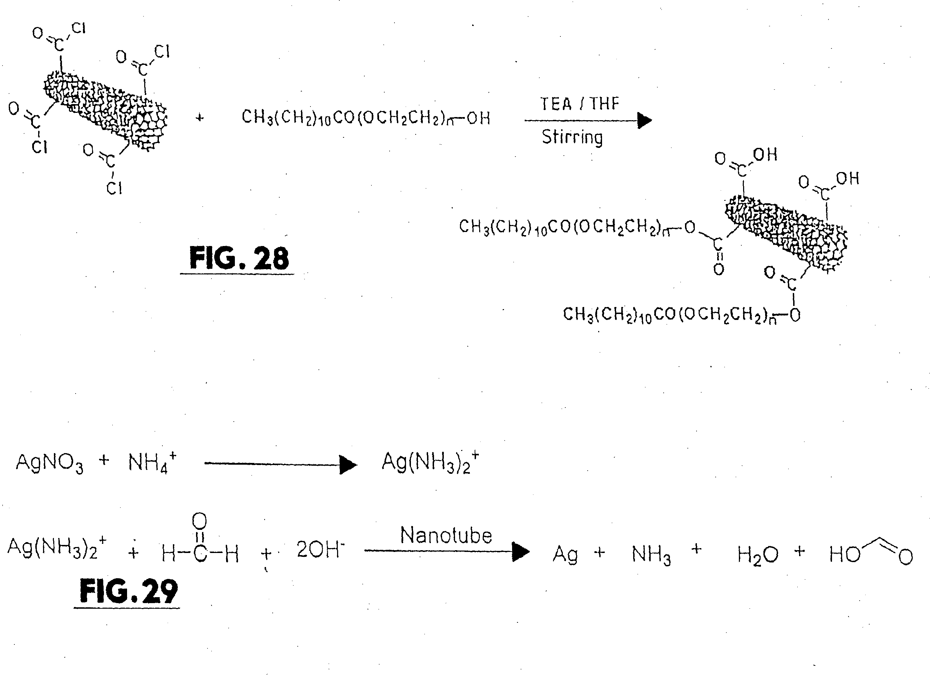

In der Figur 28 ist - ausgehend von den an ihrer Oberfläche entsprechend der Figur 2 behandelten Nanofasern - nochmals ein Verfahren zur Behandlung des Nanofasermaterials dargestellt, und zwar mit Tetrahydrofuran (THF) als Lösungsmittel und mit Trietylarmin (TEA). Aus dem in dieser Weise behandelten Nanofasermaterial lassen sich mit geeigneten Lösungsmitteln Dispersionen mit hoher Stabilität herstellen, beispielsweise die in der nachstehenden Tabelle 14 angegebenen Dispersionen:

**Tabelle 14**

| Lösunasmittel | Stabilität |
|---|---|
| | |
| Dichlormethan | >1 Woche |
| destilliertes Wasser | >1 Woche |
| PEG | >1 Woche |
| Aceton | >1 Woche |

Ein ganz wesentlicher Gesichtspunkt der Erfindung besteht in der Beschichtung des Nanofasermaterials mit Silber oder Silberpartikeln (insbesondere auch Nanopartikel). Für dieses Verfahren ist eine thermische Vorbehandlung des Nanofasermaterials erforderlich, und zwar bei einer Temperatur, bei der der für die Herstellung des Nanofasermaterials verwendete Katalysator verdampft, d.h. bei einer Temperatur deutlich über 1000 bis 1500 °C, vorzugsweise bei einer Temperatur im Bereich zwischen 2500°C und 3000°C, wobei dann die Temperatur der Vorbehandlung eher im oberen Bereich diese Spektrums liegt.

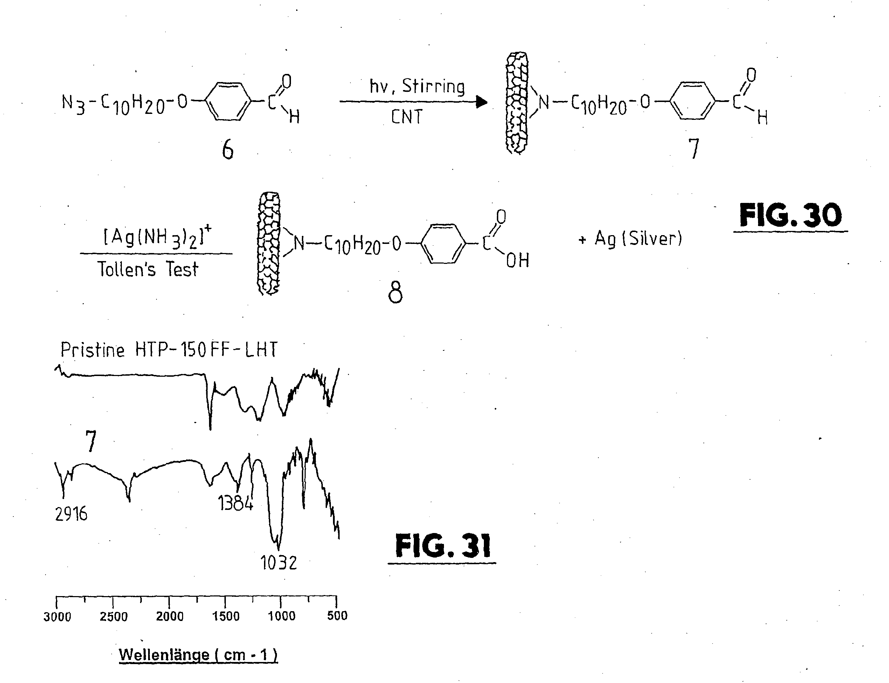

Das Beschichten des Nanofasermaterials, d.h. der einzelnen Nanofasern oder Nanotubes aus Kohlenstoff bzw. Carbon mit Silber erfolgt beispielsweise in einem chemischen Verfahren. Ein derartiges Verfahren ist in der Figur 29 dargestellt, d. h. ein Abschalten von Silber durch Reduktion. Es hat sich gezeigt, dass ein besonders wirksames Abscheiden von Silber auf dem Nanofasermaterial dann erreicht wird, wenn dieses Material zuvor auch einer chemischen Oberflächenbehandlung unterzogen wurde. Ein entsprechendes Verfahren ist in der Figur 30 dargestellt. Als Nanofaser ist beispielsweise wiederum die Nanofaser des Types Pristine HTP-150FF-LHT verwendet. In der Figur 31 ist das Infrarotspektrum des chemisch behandelten Nanofasermaterials (dortige Kurve 7) im Vergleich mit dem InfrarotSpektrum des unbehandelten Nanofasermaterials Pristine HTP-150FF-LHT dargestellt.

Die nachstehende Tabelle 15 bezieht sich auf die Dispersion des mit Silber beschichteten Nanofasermaterial in Wasser mit einem Schaumbildner.

**Tabelle 15**

| Probe | Schaumbildner | Anteil an Schaumbildner in mg | Anteil Nanofasern in mag | destilliertes Wasser in mg | Nanofaserrest in mg |
|---|---|---|---|---|---|
| | | | | | |
| 1 | Triton X | 3 | 32,9 | 25 | 7 |
| 2 | Sodium dodecyl sulfat | 3,2 | 34,2 | 25 | 4,1 |
| 3 | Sodium dodecylbenzensulfat | 3,4 | 32,1 | 25 | 2 |
| 4 | Cetyldimethylethylammonium bromide | 3,2 | 30 | 25 | 5,6 |
| 5 | - | - | 32,3 | 25 | 8,5 |

Die der Silberbeschichtung vorausgehende thermische Vorbehandlung erfolgt bevorzugt in mehreren Schritten, und zwar zunächst in einem ersten Reinigungsschritt bei einer Temperatur im Bereich zwischen 1000 und 1500 °C, u.a. zum Reinigen des Nanofasermaterials von Kohlenwasserstoff, insbesondere polymerisierten Wasserstoffen, die u.a. aus dem Herstellungsverfahren der Nanofasern resultieren.

In einem zweiten Verfahrensschritt erfolgt dann das Reinigen des Nanofasermaterials von dem bei dessen Herstellung verwendeten Katalysator, und zwar durch Behandlung bzw. Erhitzen bei ca. 3000°C. In diesem Verfahrensschritt erfolgt dann auch eine zumindest teilweise Grafitisierung des Nanofasermaterials.

Im Anschluss daran erfolgt die chemische Vorbehandlung des Nanofasermaterials, zur Bildung von chemischen Verbindungen an der Oberfläche des Nanofasermaterials, beispielsweise zur Bildung von Carboxyl-Gruppen, die (chemischen Verbindungen) eine erhöhte Affinität zu Silber aufweisen, sodass ein besonders wirksames chemisches Abscheiden von Silber als Nano-Silber-Partikel an der Oberfläche der Nanofasern bzw. Nanotubes möglich ist.

Das mit Silber beschichtete Nanofasermaterial ist für unterschiedlichste Anwendungen geeignet, insbesondere auch für elektrisch leitende Wärmeleitpasten oder Leitkleber, u.a. mit dem Vorteil, dass durch das silberbeschichtete Nanofasermaterial der bei derartigen Wärmeleitpasten oder Leitklebern bisher notwendige hohe Silberanteil reduziert und damit auch das Gewicht solcher Produkte verringert werden kann.

In der nachstehenden Tabelle 16 sind verschiedene Zusammensetzungen und insbesondere auch deren thermische und elektrische Leitfähigkeit wiedergegeben, und zwar jeweils bezogen auch auf die thermische sowie elektrische Leitfähigkeit des nicht mit Silber beschichteten Nanofasermaterials http-150FF-LHT.

**Tabelle 16**

| Probe | Nanofasermaterial Gewichts% | Silber Gewichts% | Thermische Leitfähigkeit | Differenz (%) | elektrische Leitfähigkeit | Differenz (%) |
|---|---|---|---|---|---|---|
| | | | | | | |
| 1 | 100 | 0 | 1,1135 | - | 0,07289 | - |
| 2 | 90 | 10 | 1,1135 | 0 | 0,15485 | +112,4 |
| 3 | 65 | 35 | 1,1143 | +,07 | 0,11734 | +61 |
| 4 | 50 | 50 | 1,1514 | +3,3 | 0,1002 | +37,4 |
| 5 | 5 | 95 | 1,2811 | +15 | 0,00831 | -777 |
| 6 | 10 | 90 | 1,2608 | +13,2 | 0,02163 | -237 |
| 7 | 0 | 100 | 1,3138 | - | 0,00623 | - |

Jede Probe enthielt 0,2 g Nanofasermaterial und 1,7 g an PEG (₄₀₀).

Die thermische Leitfähigkeit ist in der vorstehenden Tabelle 16 als W/m°K und die elektrische Leitfähigkeit als S/cm angegeben.

Analog zu der Beschichtung mit Silber sieht die Erfindung weiterhin vor, das Nanofasermaterial, d.h. die einzelnen Nanofasern bzw. Nanotubes mit einem polymeren Material zu umhüllen, beispielsweise mit Polyanilin. Das in dieser Form behandelte Nanofasermaterial eignet sich ebenfalls für eine Vielzahl von Anwendungen, beispielsweise in elektrisch isolierenden Wärmeleitpasten oder in Wärme leitenden, elektrisch aber isolierenden Klebern. Ein großer Vorteil dieser Produkte besteht u.a. darin, dass z.B. bei der Fertigung elektrischer Schaltungen oder Schaltkreise, die beispielsweise auf einer Platine oder Leiterplatte Bauelemente in hoher Konzentration aufweisen, mit der elektrisch isolierenden Wärmeleitpaste eine optimale Kühlung von Bauelementen möglich ist, ohne die Gefahr, dass Wärmeleitpaste, die z.B. bei der Fertigung zufällig auf eine umgebende Schaltung gelangt, dort Kurzschlüsse oder andere Beschädigungen verursacht.

Wie aus der Tabelle 16 ersichtlich ist, lässt sich durch entsprechende Wahl des Anteils an Silber bezogen auf den Anteil an Nanofasermaterial eine optimale thermische Leitfähigkeit bei optimaler elektrischer Leitfähigkeit erreichen.

In der nachstehenden Tabelle 17 ist für verschiedene Proben, die thermische Leitfähigkeit und die elektrische Leitfähigkeit in Abhängigkeit von dem Verhältnis zwischen Nanofasern und Polymer (Polyanilin) wiedergegeben.

**Tabelle 17**

| Probe | Anilin Gew% | Nanofasermaterial Gew% | thermische Leitfähgigkeit | elektrische Leitfähigkeit |
|---|---|---|---|---|
| | | | | |
| 1 | 0 | 100 | 0,8552 | 0,0333 |
| 2 | 10 | 90 | 0,8002 | 0,00215 |
| 3 | 30 | 70 | 0,5261 | 0,00265 |
| 4 | 50 | 50 | 0,1347 | 0,008625 |
| 5 | 30 | 70 | 0,2753 | 0,000278 |

Die thermische Leitfähigkeit ist in der vorstehenden Tabelle 17 wiederum mit W/mK und die elektrische Leitfähigkeit in S/cm angegeben.

Die Proben enthalten jeweils 1gr. Nanofasermaterial Pristine ENF-100-HT auf 5,5gr PEG₍₄₀₀₎, allerdings bei unterschiedlicher Umhüllung des Nanofasermaterial, nämlich:
- Probe 1: Nanofasermaterial (15Gew%) in PEG₍₄₀₀₎
- Proben 2 - 4: Nanofasermaterial mit Polyanilin in Emeraldin-Salz-Form
- Probe 5: Nanofasermaterial mit Polyanilin in Emeraldin-Base-Form

Die Tabelle 17 zeigt, dass sich bei einem bestimmten Verhältnis Anteile des Polymers (Polyanilin) und des Nanofasermaterials und bei in einer bestimmten Weise vorbehandelten Nanofasern ein Optimum hinsichtlich der thermischen Leitfähigkeit und eines möglichst hohen elektrischen Widerstandes erreichen lässt, und zwar beispielsweise bei der Probe 5.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 7: Nanofaser des Typs ENF-100-HT
- 7.1: röhrchenförmiger Innenraum der Nanofaser 7
- 7.2: schuppenförmige Außenfläche der Nanofaser 7
- 8: Ni-Katalysator der Nanofaser 7
- 9: Nanofaser des Typs HTF-110
- 9.1: Knotenabschnitt
- 9.2: Hohlräume im Inneren der Nanofaser 9
- 10: Katalysator der Nanofaser 9
- 11: ferromagnetisch beschichtete Nanofaser

- 21: Mehrschichtmaterial
- 22: Substrat
- 22.1: Trägermaterial
- 22.2: Isolierschicht
- 23: Metallisierung
- 24: Kleber- oder Bondschicht
- 25: Heizplatte
- 26, 27: Messplatte
- 28: Probe
- 29, 30: Platte
- 31, 32: Schicht aus Wärmeleitpaste

## Patentansprüche

1. Mehrschichtmaterial, bestehend aus wenigstens einer ersten Komponente (22) und wenigstens einer weiteren Komponente aus Metall, beispielsweise aus Kupfer, wobei die Komponenten an einander benachbarten und für eine Wärmeübertragung vorgesehenen Flächen über eine Zwischenschicht miteinander verbunden sind, die von einer Zusammensetzung gebildet ist, welche in einer Kunststoff-Matrix Nanofasermaterial in Form von Nanofasern und/oder Nanotubes auf Carbon-Basis enthält, wobei das Nanofasermaterial bei einer Temperatur im Bereich zwischen 1000°C und 3000°C thermisch vorbehandelt ist,
**dadurch gekennzeichnet,**
**dass** das Mehrschichtmaterial eine Leiterplatte ist, dass die erste Komponente (22) ein plattenförmiges Keramiksubstrat (22) und die wenigstens eine weitere Komponente eine Metallschicht (23) sind, die über die Zwischenschicht, welche eine Klebeschicht (24) mit einer als Kleber geeigneten Kunststoffmatrix ist, mit einer Oberflächenseite der Keramikschicht dauerhaft verbunden ist.

2. Mehrschichtmaterial nach Anspruch 1, **dadurch gekennzeichnet, dass** das Nanofasermaterial bei einer Temperatur von etwa 3000°C vorbehandelt ist.

3. Mehrschichtmaterial nach Anspruch 1 oder 2, **dadurch gekennzeichnet, dass** auf das Keramiksubstrat (22) beidseitig jeweils über eine Klebeschicht (24) als weitere Komponente eine Metallschicht (23) aufgebracht ist.

4. Mehrschichtmaterial nach einem der vorhergehenden Ansprüche, **dadurch gekennzeichnet, dass** die erste Komponente ein Substrat aus einer Aluminiumoxid, Aluminiumnitrid und/oder Siliziumnitrid-Keramik ist.

5. Mehrschichtmaterial nach einem der vorhergehenden Ansprüche, **dadurch gekennzeichnet, dass** die wenigstens eine Klebeschicht (24) nach dem Aushärten durch Kompression, beispielsweise durch Hippen oder durch Behandlung im Vakuum verdichtet ist.

6. Mehrschichtmaterial nach einem der vorhergehenden Ansprüche, **dadurch gekennzeichnet, dass** das Nanofasermaterial bzw. die dieses Material bildenden Nanofasern oder Nanotubes in einer Achsrichtung senkrecht zu den einander benachbarten Flächen orientiert sind.

7. Mehrschichtmaterial nach einem der vorhergehenden Ansprüche, **dadurch gekennzeichnet, dass** die Nanofasern und/oder Nanotubes für ein Orientieren durch ein äußeres Magnetfeld ferromagnetisch ausgebildet sind.

8. Mehrschichtmaterial nach einem der vorhergehenden Ansprüche, **dadurch gekennzeichnet, dass** die als Kleber geeignete Kunststoff-Matrix eine solche auf Epoxy-Basis oder Polyester-Basis ist.

9. Mehrschichtmaterial nach einem der vorhergehenden Ansprüche, **dadurch gekennzeichnet, dass** die Matrix bezogen auf das Gesamtgewicht 5 - 30 Gewichts% Nanofasermaterial enthält.

10. Mehrschichtmaterial nach einem der vorhergehenden Ansprüche, **dadurch gekennzeichnet, dass** die Nanofasern und/oder Nanotubes mit einem ferromagnetischen Material, z.B. mit Fe₂O₃ versehen bzw. beschichtet sind.

## Claims

1. A multi-layer material, consisting of at least one first component (22) and at least one further component made of metal, for example made of copper, the components being interconnected via an intermediate layer at faces which are adjacent to one another and which are provided for a heat transfer, the intermediate layer being formed by a composition which, in a polymer matrix, contains nanofibre material in the form of carbon-based nanofibres and/or nanotubes, the nanofibre material being thermally pretreated at a temperature in the range between 1000 °C and 3000 °C,
**characterised in that**
the multi-layer material is a printed circuit board, **in that** the first component (22) is a plate-like ceramic substrate (22) and the at least one further component is a metal layer (23) which is permanently connected to a surface side of the ceramic layer via the intermediate layer, which is an adhesive layer (24) having a polymer matrix suitable as adhesive.

2. The multi-layer material according to Claim 1, **characterised in that** the nanofibre material is pretreated at a temperature of approximately 3000 °C.

3. The multi-layer material according to Claim 1 or 2, **characterised in that** a metal layer (23) is applied as a further component to each side of the ceramic substrate (22), in each case via an adhesive layer (24).

4. The multi-layer material according to one of the preceding claims, **characterised in that** the first component is a substrate made of an aluminium oxide, aluminium nitride and/or silicon nitride ceramic.

5. The multi-layer material according to one of the preceding claims, **characterised in that** the at least one adhesive layer (24), after the curing, is compacted by compression, for example by high-temperature isostatic pressing or by treatment in a vacuum.

6. The multi-layer material according to one of the preceding claims, **characterised in that** the nanofibre material or the nanofibres or nanotubes forming this material is/are oriented in an axial direction perpendicular to the faces adjacent to one another.

7. The multi-layer material according to one of the preceding claims, **characterised in that** the nanofibres and/or nanotubes are designed ferromagnetically for orientation by an external magnetic field.

8. The multi-layer material according to one of the preceding claims, **characterised in that** the polymer matrix suitable as adhesive is an epoxy-based or polyester-based polymer matrix.

9. The multi-layer material according to one of the preceding claims, **characterised in that** the matrix contains 5-30 % by weight of nanofibre material based on the total weight.

10. The multi-layer material according to one of the preceding claims, **characterised in that** the nanofibres and/or nanotubes are provided or coated with a ferromagnetic material, for example with Fe₂O₃.

## Revendications

1. Matière multicouches constituée d'au moins un premier composant (22) et d'au moins un composant supplémentaire en métal, par exemple en cuivre, les composants étant reliés l'un à l'autre par l'intermédiaire d'une couche intermédiaire sur des surfaces mutuellement voisines et prévues pour une transmission thermique, qui sont formées par une composition qui dans une matrice en matière plastique contient de la matière en nanofibres sous la forme de nanofibres et/ou de nanotubes sur base de carbone, la matière en nanofibres étant thermiquement prétraitée à une température de l'ordre compris entre 1000°C et 3000°C,
**caractérisée en ce que** la matière multicouches est une carte de circuits imprimés, **en ce que** le composant (22) est un substrat en céramique (22) en forme de plaque et **en ce que** l'au moins un composant supplémentaire est une couche métallique (23) qui via la couche intermédiaire qui est une couche adhésive (24) avec une matrice en matière plastique adaptée en tant qu'agent adhésif est reliée durablement avec une face superficielle de la couche céramique.

2. Matière multicouches selon la revendication 1, **caractérisée en ce que** la matière en nanofibres est prétraitée à une température d'environ 3000°C.

3. Matière multicouches selon la revendication 1 ou 2, **caractérisée en ce que** sur le substrat en céramique (22) est appliquée sur les deux faces, chaque fois par l'intermédiaire d'une couche adhésive (24) une couche métallique (23) en tant que composant supplémentaire.

4. Matière multicouches selon l'une quelconque des revendications précédentes, **caractérisée en ce que** le premier composant est un substrat en une céramique à base d'oxyde d'aluminium, de nitrure d'aluminium et/ou de nitrure de silicium.

5. Matière multicouches selon l'une quelconque des revendications précédentes, **caractérisée en ce qu'**après le durcissement, l'au moins une couche adhésive (24) est compactée par compression, par exemple par compression isostatique à température élevée ou par traitement sous vide.

6. Matière multicouches selon l'une quelconque des revendications précédentes, **caractérisée en ce que**, dans une direction axiale, la matière en nanofibres respectivement les nanofibres ou nanotubes formant ladite matière sont orienté(e)s à la perpendiculaire des surfaces mutuellement voisines.

7. Matière multicouches selon l'une quelconque des revendications précédentes, **caractérisée en ce que** pour une orientation à l'aide d'un champ magnétique extérieur, les nanofibres et/ou les nanotubes sont conçu(e)s en version ferromagnétique.

8. Matière multicouches selon l'une quelconque des revendications précédentes, **caractérisée en ce que** la matrice en matière plastique adaptée en tant qu'agent adhésif en est une sur base époxy ou sur base polyester.

9. Matière multicouches selon l'une quelconque des revendications précédentes, **caractérisée en ce qu'**en rapport au poids total, la matrice contient de 5 à 30 % en poids de nanofibres.

10. Matière multicouches selon l'une quelconque des revendications précédentes, **caractérisée en ce que** les nanofibres et/ou les nanotubes sont muni(e)s ou revêtu(e)s d'une matière ferromagnétique, par exemple de Fe₂O₃.
